(19) Europäisches Patentamt
European Patent Office
Office européen des brevets

(11) **EP 1 926 647 B1**

(12) **EUROPÄISCHE PATENTSCHRIFT**

(45) Veröffentlichungstag und Bekanntmachung des Hinweises auf die Patenterteilung:
**20.04.2011   Patentblatt 2011/16**

(51) Int Cl.:
***B60W 30/08*** *(2006.01)*       ***B60W 40/04*** *(2006.01)*
***B60W 30/16*** *(2006.01)*

(21) Anmeldenummer: **06793570.0**

(22) Anmeldetag: **15.09.2006**

(86) Internationale Anmeldenummer:
**PCT/EP2006/066424**

(87) Internationale Veröffentlichungsnummer:
**WO 2007/031580 (22.03.2007 Gazette 2007/12)**

(54) **VERFAHREN UND VORRICHTUNG ZUM PRÄDIZIEREN EINER BEWEGUNGSTRAJEKTORIE**

METHOD AND DEVICE FOR PREDICTING A DISPLACEMENT PATH

PROCEDE ET DISPOSITIF PERMETTANT DE PREDIRE UNE TRAJECTOIRE DE MOUVEMENT

(84) Benannte Vertragsstaaten:
**DE FR**

(30) Priorität: **15.09.2005   DE 102005044204**
**15.09.2005   DE 102005044199**
**15.09.2005   DE 102005044200**
**27.01.2006   DE 102006004174**
**21.07.2006   DE 102006034254**
**21.07.2006   DE 102006034255**
**02.08.2006   DE 102006036363**

(43) Veröffentlichungstag der Anmeldung:
**04.06.2008   Patentblatt 2008/23**

(73) Patentinhaber: **Continental Teves AG & Co. oHG**
**60488 Frankfurt (DE)**

(72) Erfinder:
• **ARBITMANN, Maxim**
**61348 Bad Homburg (DE)**
• **SCHORN, Matthias**
**64367 Mühltal (DE)**
• **ISERMANN, Rolf**
**64342 Seeheim (DE)**
• **STÄHLIN, Ulrich**
**64287 Darmstadt (DE)**

(56) Entgegenhaltungen:
**WO-A-2004/097453       WO-A-2005/014370**
**DE-A1- 10 012 737       DE-A1- 10 118 265**
**US-A1- 2004 030 499**

**Beschreibung**

**Technisches Gebiet**

Die Erfindung betrifft ein Verfahren zum Prädizieren einer Bewegungstrajektorie eines sich im Straßenverkehr bewegenden Objekts. Ferner betrifft die Erfindung eine Vorrichtung zum Prädizieren einer Bewegungstrajektorie eines sich im Straßenverkehr bewegenden Objekts, das sich zur Durchführung des Verfahrens eignet.

**Hintergrund der Erfindung**

Ein Ziel bei der Entwicklung von Kraftfahrzeugen sind Fahrerassistenzsysteme zur Unfallvermeidung. Diese Systeme überwachen das Umfeld des Fahrzeugs, entscheiden, ob es zu einer Kollision mit einem Objekt kommen kann, und greifen in das Lenksystem oder das Bremssystem des Fahrzeugs ein, um den Unfall durch ein Ausweichen oder Abbremsen zu vermeiden. Voraussetzung für die Entscheidung, ob ein Unfall geschehen kann oder nicht, ist die Prädiktion der zukünftigen Position des Objekts in einem Zeitraum von einigen Sekunden.

Bekannte Prädiktionsverfahren basieren auf einer Extrapolation der erfassten Bahn des Objekts. Ein Beispiel für ein solches Verfahren ist die Eulersche Extrapolation, bei der die Position $\bar{x}(t+T)$ des Objekts zu einem Zeitpunkt t+T aus der Position und der Geschwindigkeit zu dem Zeitpunkt t prädiziert wird:

$$\bar{x}(t+T) = \bar{x}(t) + \dot{\bar{x}}(t) \cdot T \qquad\qquad (1)$$

Gleichfalls bekannt ist die polynomische Extrapolation. Hier gilt in dritter Ordnung beispielsweise

$$\bar{x}(t+T) = \vec{c}_3(t+T)^3 + \vec{c}_2(t+T)^2 + \vec{c}_1(t+T) + \vec{c}_0$$

wobei zur Ermittlung der Koeffizienten $\bar{c}_i$ die in den vorangegangenen Zeitschritten erfassten Positionen $\bar{x}(t\text{-}iT)$ herangezogen werden. In vielen Fällen kann die Trajektorie des Objekts mithilfe derartiger Verfahren jedoch nicht mit ausreichender Zuverlässigkeit prädiziert werden. So können etwa Anhaltemanöver oder Spurwechsel des Objekts insbesondere für große Prädiktionszeiträume nicht korrekt vorhergesagt werden. Bei einem Spurwechsel führen die Verfahren in der Regel vielmehr zur Prädiktion einer Kurvenfahrt und bei einem Anhaltemanöver ergibt sich aufgrund der Extrapolation eine zukünftige Rückwärtsfahrt des Objekts.

Die US2004/0030499A1 betrifft ein Verfahren und eine Vorrichtung zum Triggern und Implementieren einer Abbremsung eines Fahrzeugs, um eine Kollision zu vermeiden. In einem Sensorerfassungsbereich werden hierzu Objekte detektiert, gemessene Variablen für jedes detektierte Objekt bestimmt, die detektierten Objekte verschiedenen Objektklassen basierend auf den bestimmten, zugewiesenen gemessenen Variablen zugewiesen, und die Bewegungstrajektorien der Objekte auf Basis der Zuweisung der detektierten Objekte zu den bestimmten Klassen prädiziert.

**Darstellung der Erfindung**

Es ist daher eine Aufgabe der vorliegenden Erfindung, die zukünftige Position eines sich im Straßenverkehr bewegenden Objekts, mit einer höheren Zuverlässigkeit zu prädizieren. Insbesondere soll eine zuverlässige Prädiktion auch für größere Prädiktionszeiträume ermöglicht werden.

Erfindungsgemäß wird diese Aufgabe durch ein Verfahren mit den Merkmalen des Patentanspruchs 1 und durch eine Vorrichtung mit den Merkmalen des Patentanspruchs 39 gelöst.

Demgemäß ist es vorgesehen, dass ein Verfahren der eingangs genannten Art mit den folgenden Schritten durchgeführt wird:

- Ermitteln wenigstens einer Bewegungsgröße des Objekts,

- Ermitteln eines Fahrmanövers, das von dem Objekt ausgeführt wird, anhand einer Bewertung der ermittelten Bewegungsgröße,

- Auswählen eines Modells für die Bewegung des Objekts in Abhängigkeit von dem ermittelten Fahrmanöver und

- Berechnen der Bewegungstrajektorie des Objekts anhand des ausgewählten Modells.

Ferner wird eine Vorrichtung der eingangs genannten Art geschaffen, die folgende Einrichtungen umfasst:

- Wenigstens einen Sensor, aus dessen Signalen eine Bewegungsgröße des Objekts ermittelbar ist,

- eine Fahrmanövererkennungseinrichtung, mit der anhand einer Bewertung der ermittelten Bewegungsgröße ein Fahrmanöver des Objekts ermittelbar ist und

- eine Prädiktionseinrichtung, mit der anhand eines Modells die Bewegungstrajektorie des Objekts berechenbar ist, wobei das Modell in Abhängigkeit von dem ermittelten Fahrmanöver aus einer Menge von Modellen auswählbar ist.

Vorteilhaft wird bei der Erfindung zunächst ein Fahrmanöver ermittelt, das von dem Objekt ausgeführt wird. Die Prädiktion der Bewegungstrajektorie des Objekts erfolgt dann anhand eines Modells, das in Abhängigkeit von dem ermittelten Fahrmanöver ausgewählt wird. Hierdurch können für verschiedene festgestellte Fahrmanöver des Objekts jeweils angepasste Prädiktionsmodelle verwendet werden. Damit werden Genauigkeit und Zuverlässigkeit der Prädiktion wesentlich erhöht. Unter dem Begriff Objekt ist hier insbesondere sowohl ein Kraftfahrzeug zu verstehen als auch ein Objekt im Umfeld des Kraftfahrzeugs, bei dem es sich beispielsweise um ein weiteres Fahrzeug handeln kann. Unter dem Begriff Bewegungsgröße sind insbesondere alle fahrdynamischen Zustandsgrößen eines Objekts zu verstehen. Beispielsweise sind die Objektgeschwindigkeit, ein Gierwinkel, eine Gierrate, ein Schwimmwinkel und ein Lenkwinkel lenkbarer Räder des Objekts von dem Begriff umfasst.

Bei einer Ausführungsform des Verfahrens und der Vorrichtung ist es vorgesehen, dass das Fahrmanöver aus einer Menge von vorgegebenen Fahrmanövern ausgewählt wird.

Hierdurch wird es beispielsweise ermöglicht, das Fahrmanöver aus einer Menge auszuwählen, die typische Fahrmanöver von Kraftfahrzeugen im Straßenverkehr umfasst. Die Prädiktion kann damit an diese typischen Manöver angepasst werden.

Eine weitere Ausführungsform des Verfahrens und der Vorrichtung sieht vor, dass sich das ermittelte Fahrmanöver aus einem die Längsbewegung des Objekts beschreibenden Fahrmanöver und einem die Querbewegung des Objekts beschreibenden Fahrmanöver zusammensetzt.

Durch eine solche getrennte Betrachtung der Längs- und Querdynamik des Objekts wird eine besonders einfache und damit schnelle und ressourcenschonende Prädiktion ermöglicht.

Eine Ausgestaltung des Verfahrens und der Vorrichtung sieht vor, dass das die Querbewegung des Objekts beschreibende Fahrmanöver aus einer Menge ausgewählt wird, die wenigstens eine Geradeausfahrt, eine Kurvenfahrt und einen Spurwechsel umfasst.

Hierdurch sind die am häufigsten im Straßenverkehr und insbesondere auf einer Autobahn bzw. einer Kraftfahrstraße auftretenden Fahrmanöver berücksichtigt, so dass eine modellbasierte Prädiktion für nahezu alle auf derartigen Verkehrswegen von einem Objekt durchgeführten querdynamischen Manöver durchgeführt werden kann.

Es hat sich gezeigt, dass eine Unterscheidung zwischen einem Spurwechsel und einer Kurvenfahrt des Objekts anhand einer charakteristischen Bewegungsgröße getroffen werden kann, die aus wenigstens zwei Bewegungsgrößen des Objekts gebildet wird. Als eine erste in die charakteristische Bewegungsgröße eingehende Bewegungsgröße des Objekts wird dabei vorteilhaft eine die Änderung der Bewegungsrichtung des Objekts charakterisierende Größe herangezogen. Hierbei kann es sich beispielsweise um die Gierrate des Objekts oder eine Änderungsrate des Kurswinkels des Objekts handeln.

Daher ist eine Ausgestaltung des Verfahrens und der Vorrichtung dadurch gekennzeichnet, dass eine Unterscheidung zwischen einer Kurvenfahrt und einem Spurwechsel anhand einer charakteristischen Bewegungsgröße getroffen wird, die aus einer ersten Bewegungsgröße, die eine Änderung der Bewegungsrichtung des Objekts charakterisiert, und wenigstens einer zweiten Bewegungsgröße des Objekts gebildet wird.

Vorteilhaft ermöglicht eine Korrelation zwischen der ersten und der zweiten Bewegungsgröße eine Unterscheidung zwischen einer Kurvenfahrt und einem Spurwechsel. Die erste Bewegungsgröße, bei der es sich insbesondere beispielsweise um eine Gierrate oder eine Kurswinkeländerung handeln kann, gibt dabei die Änderung der Bewegungsrichtung des Objekts an.

Es hat sich insbesondere gezeigt, dass bereits in der Anfangsphase des Fahrmanövers zwischen einer Änderung der Bewegungsrichtung und der Objektgeschwindigkeit eine Korrelation besteht, die charakteristisch für einen Spurwechsel einerseits und eine Kurvenfahrt andererseits ist.

Daher beinhaltet eine Ausführungsform des Verfahrens und der Vorrichtung, dass es sich bei der zweiten Bewegungsgröße des Objekts um eine Geschwindigkeit des Objekts handelt.

Darüber hinaus hat sich herausgestellt, dass bereits in der Anfangsphase des Fahrmanövers zwischen einer Änderung der Bewegungsrichtung und dem Lenkwinkel an lenkbaren Rädern des Objekts eine Korrelation besteht, die typisch für einen Spurwechsel einerseits und eine Kurvenfahrt andererseits ist.

Daher beinhaltet eine weitere Ausführungsform des Verfahrens und der Vorrichtung, dass es sich bei der zweiten Bewegungsgröße um einen Lenkwinkel an lenkbaren Rädern des Objekts handelt.

Eine weitere Ausführungsform des Verfahrens und der Vorrichtung ist dadurch gekennzeichnet, dass es sich bei der zweiten Bewegungsgröße um einen Lenkwinkel an lenkbaren Rädern des Objekts handelt.

Eine Ausgestaltung des Verfahrens und der Vorrichtung zeichnet sich dadurch aus, dass die Bewegungstrajektorie anhand des Modells in Abhängigkeit von wenigstens einem Parameter bestimmt wird.

Bei einer Weiterbildung des Verfahrens und der Vorrichtung ist es vorgesehen, dass eine anhand der Bewegungstrajektorie prädizierte Position des Objekts mit einer erfassten Position des Objekts verglichen wird, und dass der Parameter in Abhängigkeit von dem Ergebnis des Vergleichs angepasst wird.

Hierdurch können die Prädiktionsergebnisse für einen späteren Zeitpunkt anhand eines Vergleichs der gemessenen Position und der Prädiktion für einen früheren Zeitpunkt angepasst werden. Die Prädiktion für den späteren Zeitpunkt wird hierdurch weiter verbessert.

Die Erfindung eignet sich insbesondere für die Prädiktion der Bewegungstrajektorien von Objekten im Umfeld eines Kraftfahrzeugs. Daher ist eine Ausführungsform des Verfahrens und der Vorrichtung dadurch gekennzeichnet, dass es sich bei dem Objekt um ein im Umfeld eines Kraftfahrzeugs befindliches Umfeldobjekt handelt, wobei die Bewegungsgröße des Umfeldobjekts mittels eines Umfeldsensors des Kraftfahrzeugs ermittelt wird.

Bei dem Umfeldobjekt kann es sich insbesondere um ein sich im Umfeld des "eigenen" Kraftfahrzeugs befindliches weiteres Kraftfahrzeug handeln.

Eine Ausgestaltung des Verfahrens und der Vorrichtung ist dadurch gekennzeichnet, dass das die Längsbewegung des Umfeldobjekts beschreibende Fahrmanöver in Abhängigkeit von einem Vergleich von in den aufeinanderfolgenden Zeitpunkten vorliegenden Geschwindigkeiten des Umfeldobjekts aus einer Menge ermittelt wird, die wenigstens eine gleichförmige Bewegung und eine Notbremsung umfasst.

Dies erlaubt eine Identifikation von relevanten die Längsbewegung des Umfeldobjekts beschreibenden Manövers auch dann, wenn der Bewegungszustand des Umfeldobjekts - beispielsweise aufgrund von Fehlern bei der Erfassung - nur mit einer geringeren Genauigkeit festgestellt werden kann. Dies ist oftmals der Fall, wenn die Geschwindigkeit bzw. die Beschleunigung des Umfeldobjekts mittels eines Umfeldsensors anhand eines Vergleichs von Positionsdaten ermittelt werden muss.

Eine weitere Ausführungsform des Verfahrens und der Vorrichtung sieht vor, dass eine Bewegungsrichtung des Umfeldobjekts in aufeinanderfolgenden Zeitpunkten ermittelt wird und dass das die Querbewegung des Umfeldobjekts beschreibende Fahrmanöver anhand eines Vergleichs von aus den ermittelten Bewegungsrichtungen ermittelten Kurswinkeln bestimmt wird.

Bei einer Ausgestaltung des Verfahrens und der Vorrichtung ist es zudem vorgesehen, dass das die Querbewegung des Umfeldobjekts beschreibende Fahrmanöver anhand eines Vergleichs der Größe

$$\left(\gamma_{Obj,0}(t) - \gamma_{Obj,0}(t_0)\right) \cdot v_{Obj,0}$$

mit wenigstens einem Schwellenwert ermittelt wird, wobei $\gamma_{Obj,0}(t)$ den Kurswinkel in einem ortsfesten Achsenkreuz in einem Beobachtungszeitpunkt, $\gamma_{Obj,0}(t_0)$ den Kurswinkel in dem ortsfesten Achsenkreuz zu Beginn einer Veränderung des Kurswinkels und $v_{Obj,0}$) die Geschwindigkeit des Umfeldobjekts bezeichnet.

Hierdurch lässt sich eine besonders einfache und zuverlässige Identifikation des von einem Umfeldobjekt ausgeführten Fahrmanövers vornehmen. Unter dem Beobachtungszeitpunkt wird der Zeitpunkt bzw. Zeitschritt verstanden, in dem der Kurswinkel $\gamma_{Obj,0}(t)$ erfasst worden ist und in dem die Identifikation des Fahrmanövers vorgenommen wird.

Eine weitere Ausgestaltung des Verfahrens und der Vorrichtung beinhaltet, dass ein Spurwechsel des Umfeldobjekts ermittelt wird, wenn sich der Kurswinkel des Objekts in einem vorgegebenen Maße ändert und wenn die Größe

$$\left(\gamma_{Obj,0}(t) - \gamma_{Obj,0}(t_0)\right) \cdot v_{Obj,0}$$

Werte innerhalb eines vorgegebenen Intervalls annimmt.

Insbesondere ermöglicht eine Bewertung der genannten Größe somit eine Identifizierung eines Spurwechsels bereits in seiner Anfangsphase.

Anhand der Größe lassen sich zudem Spurwechsel von Kurvenfahrten des Umfeldobjekts bereits in der Anfangsphase des Manövers unterscheiden. Daher sieht eine Ausführungsform des Verfahrens und der Vorrichtung vor, dass eine Kurvenfahrt des Umfeldobjekts ermittelt wird, wenn sich der Kurswinkel des Objekts in einem vorgegebenen Maße ändert und wenn die Größe

$$\left(\gamma_{Obj,0}(t) - \gamma_{Obj,0}(t_0)\right) \cdot v_{Obj,0}$$

Werte außerhalb des vorgegebenen Intervalls annimmt.

Ferner ist eine Ausführungsform des Verfahrens und der Vorrichtung dadurch gekennzeichnet, dass die Bewegungstrajektorie des Umfeldobjekts anhand einer prädizierten Geschwindigkeit des Umfeldobjekts und einem prädizierten Kurswinkel des Umfeldobjekts ermittelt wird.

Eine Ausgestaltung des Verfahrens und der Vorrichtung beinhaltet, dass die Bewegungstrajektorie des Umfeldobjekts rekursiv berechnet wird, wobei eine Position des Umfeldobjekts in einem Prädiktionsschritt anhand der prädizierten Geschwindigkeit und dem prädizierten Kurswinkel aus der in einem vorangegangenen Prädiktionsschritt ermittelten Position bestimmt wird.

Weiterhin ist es bei einer Ausführungsform des Verfahrens und der Vorrichtung vorgesehen, dass die prädizierte Geschwindigkeit des Umfeldobjekts anhand des ausgewählten die Längsbewegung des Umfeldobjekts beschreibenden Modells berechnet wird.

Zudem sieht eine Ausführungsform des Verfahrens und der Vorrichtung vor, dass der prädizierte Kurswinkel des Umfeldobjekts anhand des ausgewählten die Querbewegung des Umfeldobjekts beschreibenden Modells berechnet wird.

Eine Weiterbildung des Verfahrens und der Vorrichtung zeichnet sich dadurch aus, dass der prädizierte Kurswinkel des Umfeldobjekts nach Maßgabe einer Sigmoidfunktion berechnet wird, wenn als Fahrmanöver einer Spurwechsel festgestellt worden ist, wobei die Gestalt der Sigmoidfunktion durch wenigstens einen Parameter bestimmt wird, der in Abhängigkeit von der Geschwindigkeit des Umfeldobjekts ermittelt wird.

Unter einer Sigmoide bzw. einer Sigmoidfunktion wird dabei im üblichen Sinne eine in etwa S-förmige, reelle, stetig differenzierbare, monotone und beschränkte Funktion mit einem Wendepunkt verstanden. Beispiele hierfür sind Funktionen von der Form einer hyperbolischen Tangensfunktion $f(x)=\alpha\tanh(\beta(x-\gamma))$, einer logistischen Funktion $f(x)=\alpha/(1+\exp(-\beta(x-\gamma))$ oder einer Arkustangensfunktion $f(x)=\alpha\arctan(\beta(x-\gamma))$ mit zumindest teilweise dynamisch zu bestimmenden Parametern $\alpha,\beta,\gamma$. Anhand derartiger Funktionen kann die Trajektorie geschlossen angegeben werden. Ferner sind die Parameter, die die Gestalt der Sigmoide bestimmen, in einfacher und effizienter Weise anhand weniger Nebenbedingungen bestimmbar.

Darüber hinaus beinhaltet eine Ausgestaltung des Verfahrens und der Vorrichtung, dass der für den Zeitpunkt $t+\Delta t$ prädizierte Kurswinkel $\gamma_{Obj,0}(t+\Delta t)$ des Umfeldobjekts durch

$$\gamma_{Obj,0}(t + \Delta t) = \gamma_{obj,0}(t) + p \cdot \Delta t$$

berechnet wird, wenn als Fahrmanöver eine Kurvenfahrt festgestellt worden ist, wobei es sich bei der Größe $\gamma_{Obj,0}(t)$ um den Kurswinkel des Umfeldobjekts in einem Beobachtungszeitpunkt $t$ handelt, $\Delta t$ ein Zeitintervall und $p$ ein Parameter ist.

Die Erfindung eignet insbesondere auch dazu, die Bewegungstrajektorie des eigenen Kraftfahrzeugs zu bestimmen. Daher sieht eine Ausgestaltung des Verfahrens und der Vorrichtung vor, dass es sich bei dem Objekt um das Kraftfahrzeug handelt, wobei die Bewegungsgröße mittels wenigstens eines Fahrzeugsensors erfasst wird.

Eine Ausgestaltung des Verfahrens und der Vorrichtung ist dadurch gekennzeichnet, dass das die Querbewegung des Kraftfahrzeugs beschreibende Fahrmanöver anhand einer Gierrate des Kraftfahrzeugs und/oder anhand eines an lenkbaren Rädern des Fahrzeugs eingestellten Lenkwinkels ermittelt wird.

Eine Ausführungsform des Verfahrens und der Vorrichtung beinhaltet, dass eine Geradausfahrt des Kraftfahrzeugs ermittelt wird, wenn die Gierrate des Fahrzeugs und/oder der Lenkwinkel betragsmäßig kleiner als ein Schwellenwert sind.

Es hat sich ferner gezeigt, dass zwischen der Gierrate des Kraftfahrzeugs und dem Lenkwinkel eine Korrelation besteht, die für das querdynamische Fahrmanöver des Fahrzeugs, insbesondere für eine Kurvenfahrt einerseits und einen Spurwechsel andererseits, charakteristisch ist. Anhand der Korrelation lassen sich diese Fahrmanöver bereits in ihrer Anfangsphase unterscheiden.

Eine Ausgestaltung des Verfahrens und der Vorrichtung sieht daher vor, dass eine Kurvenfahrt des Kraftfahrzeugs ermittelt wird, wenn das Produkt aus Lenkwinkel und Gierrate größer als ein vorgegebener Schwellenwert ist und/oder eine Gierwinkeländerung während des Fahrmanövers betragsmäßig größer als ein vorgegebener Schwellenwert ist.

Eine weitere Ausgestaltung des Verfahrens und der Vorrichtung sieht vor, dass ein Spurwechsel des Kraftfahrzeugs ermittelt wird, wenn keine Geradeausfahrt und keine Kurvenfahrt festgestellt werden.

Eine Weiterbildung des Verfahrens und der Vorrichtung beinhaltet, dass ein Spurwechsel in wenigstens drei aufeinander folgende Phasen aufgeteilt wird, wobei die Gierrate des Kraftfahrzeugs in einer ersten Phase betragsmäßig größer als ein Schwellenwert, in einer Zwischenphase betragsmäßig kleiner als ein Schwellenwert und in einer zweiten Phase betragsmäßig größer als ein Schwellenwert ist und wobei die Gierrate in der ersten und zweiten Phase ein unterschiedliches Vorzeichen aufweist.

Anhand dieser Phasen ist vorteilhaft ebenfalls eine Unterscheidung zwischen einem Spurwechsel und einer Kurvenfahrt bzw. einer Geradeausfahrt möglich.

Bei einer Ausführungsform des Verfahrens und der Vorrichtung ist es vorgesehen, dass für die erste Phase eine maximale Dauer vorgegeben wird, und dass nach einer vorangegangenen Erkennung eines Spurwechsels eine Kurvenfahrt ermittelt wird, wenn die Dauer der ersten Phase die maximale Dauer übersteigt.

Hierdurch lässt sich die Identifikation des Fahrmanövers korrigieren, wenn anfänglich ein Spurwechsel anstelle einer Kurvenfahrt ermittelt worden ist.

Eine weitere Ausführungsform des Verfahrens und der Vorrichtung zeichnet sich dadurch aus, dass für die erste Phase eine minimale Dauer vorgegeben wird, und dass nach einer vorangegangenen Erkennung eines Spurwechsels eine Geradeausfahrt ermittelt wird, wenn die Dauer der ersten Phase die minimale Dauer unterschreitet.

Hierdurch lässt sich die Identifikation des Fahrmanövers korrigieren, wenn anfänglich ein Spurwechsel anstelle einer Geradeausfahrt ermittelt worden ist.

Zudem beinhaltet eine Ausgestaltung des Verfahrens und der Vorrichtung, dass für die Zwischenphase des Spurwechsels eine maximale Dauer vorgegeben wird, und dass nach einer vorangegangenen Erkennung eines Spurwechsels eine Geradeausfahrt ermittelt wird, wenn die Dauer der Zwischenphase die maximale Dauer übersteigt.

Hierdurch lässt sich ebenfalls die Identifikation des Fahrmanövers korrigieren, wenn anfänglich ein Spurwechsel anstelle einer Geradeausfahrt ermittelt worden ist.

Eine Ausführungsform des Verfahrens und der Vorrichtung ist dadurch gekennzeichnet, dass die Bewegungstrajektorie des Kraftfahrzeugs für die erste Phase eines Spurwechsels in Abhängigkeit von ermittelten Längs- und Quergeschwindigkeiten und/oder in Abhängigkeit von ermittelten Längs- und Querbeschleunigungen des Kraftfahrzeugs anhand einer Eulerschen Prädiktion prädiziert wird.

Ferner sieht eine Ausgestaltung des Verfahrens und der Vorrichtung vor, dass die Bewegungstrajektorie des Kraftfahrzeugs während der ersten Phase des Spurwechsels aufgezeichnet wird und durch ein Polynom angenähert wird, und dass das dabei ermittelte Polynom zur Prädiktion der Bewegungstrajektorie des Kraftfahrzeugs für die zweite Phase des Spurwechsels herangezogen wird.

Hierdurch kann die Prädiktion der Bewegungstrajektorie für die zweite Phase des Spurwechsels vorteilhaft anhand der Trajektorie während der ersten Phase prädiziert werden. Bei der Prädiktion der zweiten Phase wird somit das Verhalten des Fahrzeugführers bei einem Spurwechsel berücksichtigt, das in der ersten Phase des Spurwechsels festgestellt worden ist. Hierdurch ergibt sich eine besonders zuverlässige und genaue Prädiktion.

Eine Weiterbildung des Verfahrens und der Vorrichtung ist dadurch gekennzeichnet, dass die prädizierte Bewegungstrajektorie für die zweite Phase des Spurwechsels dem ermittelten Polynom entspricht, das um 180° um einem Endpunkt der ersten Phase des Spurwechsels gedreht ist und das an die Bewegungstrajektorie des Kraftfahrzeugs in der Zwischenphase des Spurwechsels angesetzt wird.

Darüber hinaus beinhaltet eines Ausgestaltung des Verfahrens und der Vorrichtung, dass es sich bei dem Polynom um ein Polynom dritten Grades handelt.

Einerseits erlaubt ein derartiges Polynom eine hinreichend genaue Approximation der Bahn des Fahrzeugs und andererseits bleibt der Rechenaufwand zur Berechnung der Parameter des Polynoms hinreichend gering.

Bei einer Ausführungsform des Verfahrens und der Vorrichtung ist es zudem vorgesehen, dass die Bewegungstrajektorie des Kraftfahrzeugs anhand einer prädizierten Länge eines Kreisbogens und eines Radius des Kreisbogens ermittelt wird, wenn es sich bei dem ermittelten Fahrmanöver um eine Kurvenfahrt handelt.

Weiterhin wird ein Verfahren zum Verhindern einer Kollision zwischen einem Fahrzeug und einem Umfeldobjekt oder zum Vermindern einer Kollisionsstärke bereitgestellt. Bei dem Verfahren werden Bewegungstrajektorien des Kraftfahrzeugs, und/oder des Umfeldobjekts ermittelt, wobei die Bewegungstrajektorie des Kraftfahrzeugs und/oder die Bewegungstrajektorie des Umfeldobjekts anhand eines Verfahrens der zuvor dargestellten Art bestimmt werden. Aufgrund einer Bewertung der Bewegungstrajektorien wird ein Kollisionsort bestimmt. Dann werden in Abhängigkeit von der Entfernung von dem Kollisionsort kollisionsverhindernde und/oder kollisionsfolgenmindernde Maßnahmen eingeleitet.

Als kollisionsvermeidende Maßnahmen kommen hier beispielsweise automatische Brems- oder Ausweichmanöver in Frage sowie die Ausgabe von Warnungen des Fahrers, die dazu führen, dass dieser Maßnahmen zur Verhinderung einer Kollision ergreift. Zu Verminderung der Kollisionsstärke bzw. der Kollisionsfolgen können insbesondere passive Sicherheitssysteme wie beispielsweise Airbags angesteuert werden. Zur Verminderung der Kollisionsstärke ist ebenfalls das Warnen des Fahrers geeignet, der aufgrund der Warnung geeignete Maßnahme zur Vermindern der Kollisionsstärke einleiten kann. Darüber hinaus eignen sich die Erfindung und ihre Ausführungsformen auch für einen Einsatz in einem so genannten ACC-System (ACC: Adaptive Cruise Control), dass die Geschwindigkeit eines Kraftfahrzeugs so regelt, dass ein vorgegebener Abstand zwischen dem Kraftfahrzeug und einem in Fahrtrichtung vor dem Kraftfahrzeug befindlichen weiteren Kraftfahrzeug nicht unterschritten wird.

Daher wird ebenfalls ein Verfahren zum Regeln der Geschwindigkeit eines Kraftfahrzeugs, bei dem die Geschwindigkeit des Kraftfahrzeugs derart eingestellt wird, dass ein Abstand zwischen dem Kraftfahrzeug und einem in Fahrtrichtung des Kraftfahrzeugs vor dem Kraftfahrzeug befindlichen weiteren Fahrzeug einen vorgegebenen Abstandswert nicht unterschreitet, bereitgestellt, dass dadurch gekennzeichnet ist, dass anhand eines Verfahrens der zuvor dargestellten Art eine Bewegungstrajektorie des Kraftfahrzeugs und/ oder des weiteren Fahrzeugs bestimmt wird, dass in Abhängigkeit von der Bewegungstrajektorie ein Abstand zwischen dem Kraftfahrzeug und dem weiteren Fahrzeug prädiziert wird, und dass die Geschwindigkeit des Kraftfahrzeugs in Abhängigkeit von dem prädizierten Abstand eingestellt wird.

Auf diese Weise kann insbesondere ermittelt werden, ob das weitere Fahrzeug sich aufgrund eines Fahrmanövers in die Fahrspur des Kraftfahrzeugs bewegt. Ist dies der Fall, kann die Fahrzeuggeschwindigkeit bereits frühzeitig angepasst werden.

Ferner wird ein Computerprogrammprodukt bereitgestellt, das einen Algorithmus definiert, der ein Verfahren der zuvor dargestellten Art umfasst.

Die Erfindung beinhaltet die Idee, eine modellbasierte Prädiktion der Bewegungstrajektorie eines sich im Straßenverkehr bewegenden Objekts vorzunehmen, wobei es sich bei dem Objekt insbesondere ein Kraftfahrzeug oder ein Objekt im Umfeld des Kraftfahrzeugs handeln kann. Es wird zunächst ein Fahrmanöver des Objekts identifiziert und die Prädiktion nachfolgend anhand eines Modells für dieses Fahrmanöver durchgeführt. Hierdurch kann die Bahn des Objekts insbesondere bei einer Kurvenfahrt und einem Spurwechsel des Objekts zuverlässig prädiziert werden, was mit einer Extrapolation der Objektbewegung nach dem Stand der Technik nicht möglich ist. Das Fahrmanöver wird vorteilhaft anhand eines vorgegebenen Kriteriums aufgrund einer Auswertung wenigstens einer Bewegungsgröße des Objekts aus einer Menge von typischerweise im Straßenverkehr ausgeführten Manövern ausgewählt. Anhand einer charakteristischen Bewegungsgröße kann dabei insbesondere auch eine Unterscheidung zwischen einer Kurvenfahrt und einem Spurwechsel bereits in der Anfangsphase des Manövers vorgenommen werden.

Die Prädiktionsergebnisse können dazu verwendet werden, eine drohende Kollision zwischen dem Fahrzeug und dem Objekt vorherzusagen. Im Falle einer drohenden Kollision können Maßnahmen zur Kollisionsvermeidung und/ oder zur Verminderung der Kollisionsfolgen ergriffen werden. Diese und andere Gesichtspunkte der Erfindung werden auch anhand der Ausführungsbeispiele deutlich und im Hinblick auf die Ausführungsbeispiele nachfolgend anhand der Figuren beschrieben.

**Kurze Beschreibung der Figuren**

Von den Figuren zeigt:

Fig. 1 eine schematische Darstellung eines Kraftfahr- zeugs mit einem Umfeldsensor,

Fig. 2 ein schematisches Blockdiagramm einer Einrichtung zum Prädizieren der Trajektorie eines Umfeldob- jekts,

Fig. 3 eine Veranschaulichung von zur Prädiktion verwen- deten Achsenkreuzen,

Fig. 4 eine Veranschaulichung eines charakteristischen Achsenkreuzes,

Fig. 5 eine Veranschaulichung einer Sigmoidfunktion in dem charakteristischen Achsenkreuz,

Fig. 6 ein schematisches Blockdiagramm eines Ausschnitts der Vorrichtung zum Prädizieren der Trajektorie eines Umfeldobjekts

Fig. 7 ein schematisches Blockdiagramm einer Einrichtung zum Prädizieren der Trajektorie des Fahrzeugs,

Fig. 8 Diagramme, in denen an einem Beispiel die zeitli- chen Verläufe des Gierwinkels des Fahrzeugs und eines Lenkwinkels während eines Spurwechsels und eine Unterteilung des Spurwechsels in verschiede- ne Phasen dargestellt sind,

Fig. 9 ein schematisches Blockdiagramm eines Ausschnitts einer Einrichtung zur Identifizierung eines Fahr- manövers des Fahrzeugs,

Fig. 10    ein Zustandsdiagramm zur Veranschaulichung der Identifizierung eines Fahrmanövers des Fahrzeugs,

Fig. 11    eine Skizze zur Veranschaulichung der Bahnprädik- tion für das Fahrzeug bei einer erkannten Kurven- fahrt,

Fig. 12a    eine Darstellung der relativen Häufigkeit ver- schiedener Fehlerklassen bei der Prädiktion an- hand eines erfindungsgemäßen Verfahrens und

Fig. 12b    eine Darstellung der relativen Häufigkeit ver- schiedener Fehlerklassen bei der Eulerschen Ext- rapolation.

**Darstellung von Ausführungsbeispielen**

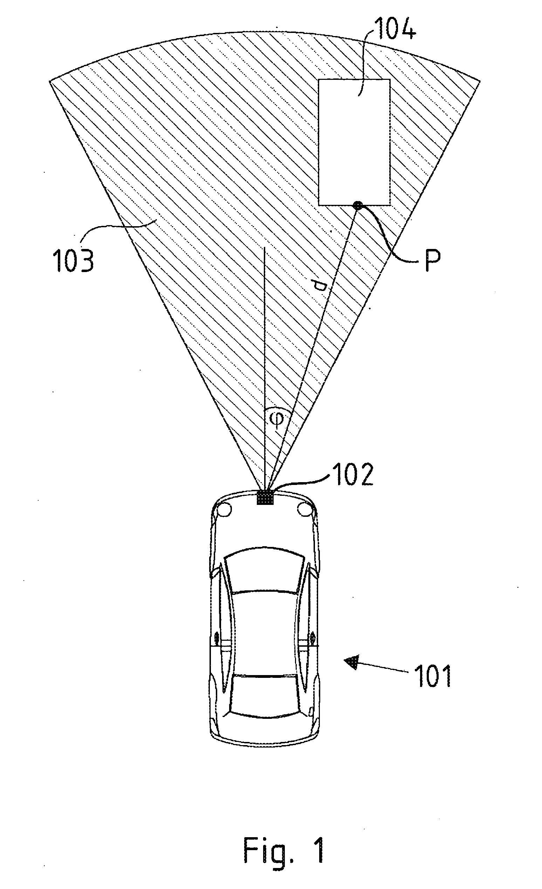

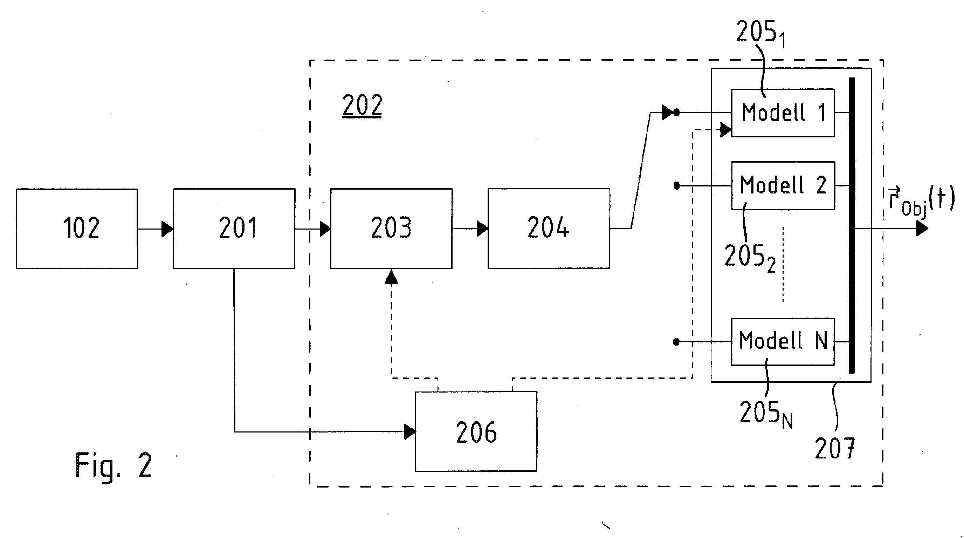

In Figur 1 ist beispielhaft ein zweiachsiges, vierrädriges Kraftfahrzeug 101 dargestellt, das über einen Umfeldsensor 102 verfügt, mit dem Umfeldobjekte im Umfeld des Fahrzeugs 101 erfasst werden können, bei denen es sich insbesondere um weitere Kraftfahrzeuge handelt, die sich in derselben oder einer benachbarten Fahrspur bewegen. Beispielhaft wird ein Umfeldsensor 102 mit einem Erfassungsbereich 103 gezeigt, der einen Raumwinkel vor dem Fahrzeug 101 umfasst, in dem beispielhaft ein Umfeldobjekt 104 dargestellt ist. Bei dem Umfeldsensor 102 handelt sich vorzugsweise um einen LIDAR-Sensor (Light Detection and Ranging) der dem Fachmann an sich bekannt ist; gleichfalls können jedoch auch andere Umfeldsensoren 102 eingesetzt werden. Der Umfeldsensor 102 misst die Abstände d zu den erfassten Punkten eines Umfeldobjekts 104 sowie die Winkel φ zwischen den Verbindungsgeraden zu diesen Punkten und der Mittellängsachse des Fahrzeugs 101, wie dies in Figur 1 beispielhaft für einen Punkt P des Umfeldobjekts 104 veranschaulicht ist. Die dem Fahrzeug 101 zugewandten Fronten der erfassten Umfeldobjekte 104 setzen sich aus mehreren erfassten Punkten zusammen, wobei eine in Figur 2 gezeigte Objekterkennungseinheit 201, zu der die Sensorsignale übermittelt werden, die Korrelationen zwischen Punkten und der Form eines Umfeldobjekts 104 herstellt und einen Bezugspunkt für das Umfeldobjekt 104 bestimmt. Als Bezugspunkt kann dabei beispielsweise der Mittelpunkt des Umfeldobjekts 104 bzw. der Mittelpunkt der erfassten Punkte des Umfeldobjekts 104 gewählt werden. Die Geschwindigkeiten der detektierten Punkte und damit die Geschwindigkeit der erfassten Umfeldobjekte 104 können mittels des Umfeldsensors 102 nicht direkt gemessen werden. Sie werden aus der Differenz zwischen den in aufeinanderfolgenden Abtastschritten gemessenen Abständen in der Objekterkennungseinheit 201 berechnet. Die Dauer eines Abtastschrittes ist die die Dauer eines Zeitschrittes verstanden, in dem eine einmalige Abtastung des Erfassungsbereichs 103 mittels des Umfeldsensors 102 und Auswertung der Sensordaten erfolgt. In ähnlicher Weise wie die Geschwindigkeit kann grundsätzlich auch die Beschleunigung der Umfeldobjekte 104 durch zweimaliges Ableiten ihrer Position bestimmt werden. Die gemessenen Abstände der erfassten Punkte und die gemessenen Winkel weisen jedoch Messfehler auf, die so große Auswirkungen auf die derart ermittelte Beschleunigung haben, dass keine hinreichend zuverlässigen Informationen aus der berechneten Beschleunigung gewonnen werden können, und das Beschleunigungssignal nicht verwendet wird. Darüber hinaus wird anhand einer Veränderung der festgestellten Position des Umfeldobjekts 104 eine Bewegungsrichtung des Umfeldobjekts 104 ermittelt.

Die mithilfe des Umfeldsensors 102 erfassten Bewegungsinformationen über das Umfeldobjekt 104 beziehen sich zunächst auf ein fahrzeugfestes Bezugssystem. Eine Umrechnung auf ein beliebiges ortsfestes Bezugssystem kann anhand der Position, Ausrichtung und Geschwindigkeit des Fahrzeugs 101 in dem ortsfesten Bezugssystem erfolgen. Die Position und Ausrichtung des Fahrzeugs 101 innerhalb eines an einem Ausgangspunkt initialisierten Bezugssystems kann beispielsweise sukzessive ausgehend von dem Ausgangspunkt anhand der von dem Startpunkt aus zurückgelegten Wegstrecke, die anhand von Signalen von Raddrehzahlsensoren ermittelbar ist, sowie anhand des Gierwinkels des Fahrzeugs 101, der aufgrund einer Integration der mittels eines Gierratensensors erfassten Gierrate des Fahrzeugs 101 feststellbar ist, ermittelt werden. Gleichfalls kann eine Bestimmung der Position und Ausrichtung des Fahrzeugs 101 in einem ortsfesten Bezugssystem beispielsweise mithilfe eines satellitengestützten Ortungssystems erfolgen.

Die Ergebnisse der Auswertung der Sensordaten des Umfeldsensors 102 werden einer Prädiktionseinrichtung 202 zugeführt, deren grundsätzliche Struktur ebenfalls in Figur 2 anhand eines schematischen Blockdiagramms dargestellt ist. Sie enthält eine Manövererkennungseinrichtung 203, in dem ein von dem Umfeldobjekt 104 ausgeführtes Fahrmanöver identifiziert wird. Die Manövererkennungseinrichtung 203 ist mit dem Block 204 verbunden, in dem in Abhängigkeit von dem identifizierten Fahrmanöver eines von N Modellen zur Prädiktion der Trajektorie des Bezugspunktes des Umfeldobjekts 104 ausgewählt wird. Von dem Block 204 wird entsprechend des ausgewählten Modells einer der Blöcke $205_1, ..., 205_N$ der Prädiktionseinrichtung 207 aktiviert, in dem anhand des ausgewählten Modells die prädizierte Bahn $\bar{r}_{Obj}(t)$ des Bezugspunktes des Umfeldobjekts 104 berechnet wird, die im Folgenden auch als Bahn oder Trajektorie des Umfeldobjekts 104 bezeichnet wird. In dem Block 206 werden die prädizierten Positionen des Umfeldobjekts 104 mit den gemessenen Positionen des Umfeldobjekts 104 verglichen. Sind die Abweichungen sehr groß, ist davon auszugehen, dass das Fahrmanöver nicht richtig identifiziert worden ist. In diesem Fall wird ein Signal an die Manövererkennungseinrichtung 203 gesendet, das zu einem Reset der gespeicherten Daten führt. Die Manövererkennungseinrichtung geht damit in den Zustand über, der beispielsweise auch beim Systemstart vorliegt, und die Identifizierung des aktuellen Manövers des Umfeldobjekts beginnt erneut. Bei kleinen Abweichungen zwischen der prädizierten und der gemessenen Position des Umfeldobjekts 104 werden Parameter des Prädiktionsmodells angepasst, um die Prädiktion zu verbessern. Bei der Objekterkennungseinheit 201 sowie bei der Prädiktionseinheit 202 bzw. deren Bestandteilen 203-207 handelt es sich vorzugsweise um Softwarekomponenten eines Computerprogramms, das in einer Mikroprozessoreinheit des Fahrzeugs 101 ausgeführt wird.

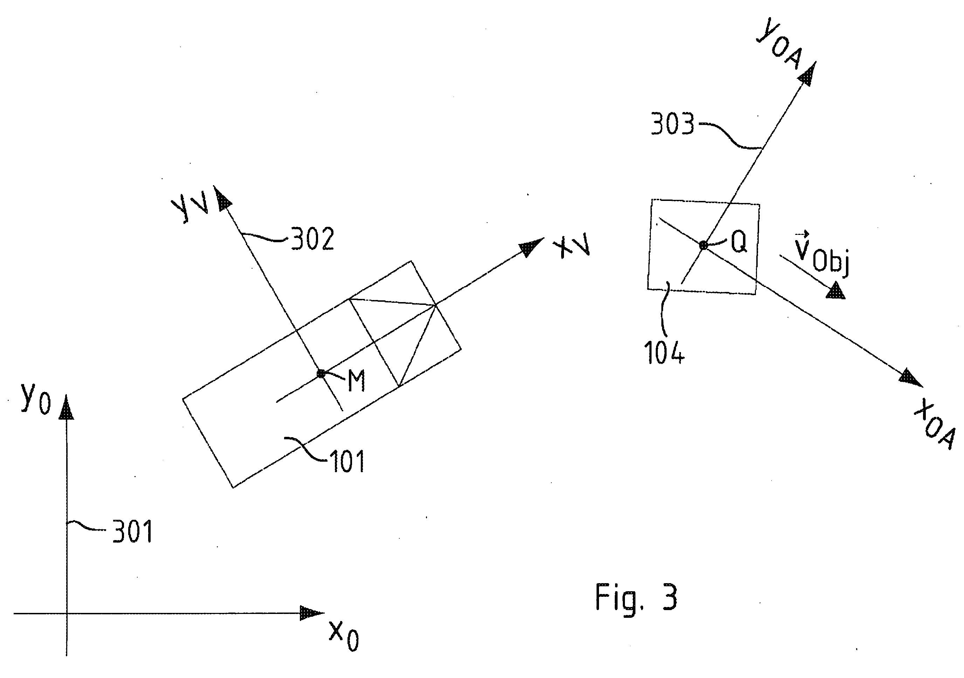

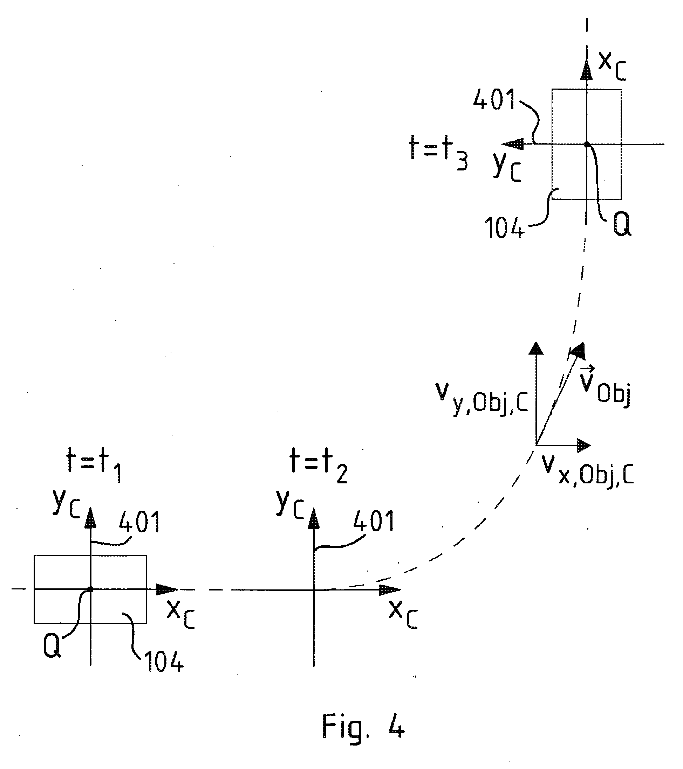

In den Figuren 3 und 4 sind die Achsenkreuze veranschaulicht, die insbesondere zur Identifikation des Fahrmanövers und zur Prädiktion der Objekttrajektorie herangezogen werden:

A. Absolutes Achsenkreuz: Bei dem absoluten Achsenkreuz 301 handelt es sich um ein raumfestes Achsenkreuz. Auf das absolute Achsenkreuz 301 bezogene Größen werden mit dem Index "0" gekennzeichnet.

B. Fahrzeugachsenkreuz: Bei dem Fahrzeugachsenkreuz 302 handelt es sich um ein ortsfestes Achsenkreuz, dessen Ursprung in jedem Abtastschritt in den Mittelpunkt M des Fahrzeugs 101 gelegt wird. Die positive x-Achse zeigt in Fahrzeuglängsrichtung nach vorne und die positive y-Achse in Fahrzeugquerrichtung nach links. Auf das Fahrzeugachsenkreuz 302 bezogene Größen werden mit dem Index "V" gekennzeichnet.

C. Objektachsenkreuz: Bei dem Objektachsenkreuz 303 handelt es sich um ein ortsfestes Achsenkreuz, dessen Ursprung in jedem Abtastschritt in den Bezugspunkt Q des Umfeldobjektes 104 gelegt wird. Die positive x-Achse zeigt in die Bewegungsrichtung des Umfeldobjekts 104, d.h. in Richtung von dessen Geschwindigkeit $\bar{v}_{Obj}$ und die positive y-Achse nach links in Bezug auf diese Richtung. Auf das Objektachsenkreuz 303 bezogene Größen werden mit dem Index "OA" gekennzeichnet.

D. Charakteristisches Achsenkreuz: Bei einem Spurwechselmanöver oder einer Kurvenfahrt wird das Objektachsenkreuz 303 zu Beginn des Fahrmanövers innerhalb des absoluten Achsenkreuzes 301 für die Dauer des Fahrmanövers fixiert. Das fixierte Objektachsenkreuz wird als charakteristisches Achsenkreuz 401 bezeichnet. Auf das charakteristische Achsenkreuz 401 bezogene Größen werden mit dem Index "C" gekennzeichnet.

In Figur 4 ist das charakteristische Achsenkreuz 401 in drei verschiedenen Zeitpunkten $t_1$, $t_2$ und $t_3$ dargestellt. Die gestrichelte Linie zeigt eine Bahn des Umfeldobjekts 104. Im Zeitpunkt $t_1$ bewegt sich das Umfeldobjekt 104 geradlinig und das charakteristische Achsenkreuz 401 entspricht dem Objektachsenkreuz 303, d.h., sein Ursprung wird in jedem Abtastschritt in den Bezugspunkt Q des Umfeldobjekts 104 gesetzt. In dem Zeitpunkt $t_2$ wird festgestellt, dass das Umfeldobjekt 104 beginnt, eine Kurve zu durchfahren. Daher wird das charakteristische Achsenkreuz 401 im Zeitpunkt $t_2$ solange fixiert, bis in dem Zeitpunkt $t_3$ festgestellt wird, dass sich das Umfeldobjekt 104 wieder geradlinig bewegt. Ferner ist in Figur 4 die Zerlegung der Objektgeschwindigkeit $\bar{v}_{Obj}$ in die Komponenten $v_{x,Obj,C}$ und $v_{y,Obj,C}$ innerhalb des charakteristischen Achsenkreuzes 401 veranschaulicht.

Die Manövererkennung in der Manövererkennungseinrichtung teilt sich in eine separate Erkennung hinsichtlich des Längs- und Querbewegungsverhaltens des Umfeldobjekts 104. Die Information über das erkannte Längsbewegungsverhalten wird verwendet, um die Geschwindigkeit des Umfeldobjekts 104 vorherzusagen und die Information über das erkannte Querbewegungsverhalten wird zur Vorhersage des Kurswinkels des Umfeldobjekts 104 herangezogen. Ferner gibt es den Sonderfall eines stehenden Umfeldobjekts 104 und eines nicht identifizierbaren Verhaltens. Die Manövererkennung basiert auf der Auswertung des Kurswinkels $\gamma_{Obj,0}$ im absoluten Achsenkreuz. Vernachlässigt man den Schwimmwinkel, kann dieser Kurswinkel aus der Längsgeschwindigkeit $v_{x,Obj,0}$ und der Quergeschwindigkeit $v_{y,Obj,0}$ im absoluten Achsenkreuz 301 berechnet werden:

$$\gamma_{Obj,0} = \arctan \frac{v_{y,Obj,0}}{v_{x,Obj,0}} \qquad\qquad (2)$$

Die Längs- und Quergeschwindigkeiten des Umfeldobjekts 104 im absoluten Achsenkreuz 301 können dabei unter Berücksichtigung der Position, Ausrichtung und Geschwindigkeit des Fahrzeugs 101 innerhalb des absoluten Achsenkreuzes 301 aus den Signalen des Umfeldsensors 102 gewonnen werden.

Im Hinblick auf das Längsbewegungsverhalten werden im Rahmen der Manövererkennung infolge der zuvor beschriebenen Ungenauigkeiten des Beschleunigungssignals lediglich zwei Verhaltensweisen unterschieden: Wenn gilt $\Delta v_{Obj,0} < -7 m/s^2$, wird eine Notbremsung des Umfeldobjekts 104 erkannt, wobei $\Delta v_{Obj,0}$ die Differenz zwischen den Beträgen $v_{Ob,0}(k)$ und $v_{Obj,0}(k\text{-}1)$ der Geschwindigkeit des Umfeldobjekts 104 im absoluten Achsenkreuz 301 im aktuellen Abtastschritt $k$ und im vorangegangenen Abtastschritt $k\text{-}1$ ist:

$$\Delta v_{Obj,0} = v_{Obj,0}(k) - v_{Obj,0}(k-1)$$

Falls keine Notbremsung des Umfeldobjekts 104 ermittelt wird, wird eine Fahrt mit konstanter Geschwindigkeit festgestellt.

Im Hinblick auf das Querbewegungsverhalten werden drei typische Fahrsituationen unterschieden:

    a) Geradeausfahrt

    b) Kurvenfahrt

    c) Spurwechsel

Hierzu wird basierend auf dem absoluten Kurswinkel $\gamma_{Obj,0}$ der charakteristische Kurswinkel $\gamma_{Obj,Ch,0}$ des Umfeldobjekts 104 im absoluten Achsenkreuz 301 definiert: Bleibt die Differenz zwischen dem absoluten Kurswinkel $\gamma_{Obj,0}(k)$ in einem Abtastschritt $k$ und dem absoluten Kurswinkel $\gamma_{Obj,0}(k-1)$ im vorangegangenen Abtastschritt $k$ -1 betragsmäßig unter einem Schwellenwert $\sigma_1$, entspricht der charakteristische Kurswinkel in dem Zeitschritt k dem absoluten Kurswinkel, d.h., es gilt $\gamma_{Obj,Ch,0}(k)=\gamma_{Obj,0}(k)$. Ist die Differenz jedoch betragsmäßig größer als der Schwellenwert $\sigma_1$, ändert sich der charakteristische Kurswinkel in dem Zeitschritt k nicht und es gilt: $\gamma_{Obj,Ch,0}(k)=\gamma_{Obj,Ch,0}(k-1)$. Die Definition des charakteristischen Kurswinkels lautet also zusammengefasst:

$$\gamma_{Obj,Ch,0}(k) = \begin{cases} \gamma_{Obj,0}(k), & \text{falls } \left|\gamma_{Obj,0}(k) - \gamma_{Obj,0}(k-1)\right| \leq \sigma_1 \\ \gamma_{Obj,Ch,0}(k-1) & \text{sonst} \end{cases} \qquad (3)$$

Wenn der Kurswinkel sich innerhalb einer vorgegebenen Grenze nicht verändert, insbesondere wenn

$$\left|\Delta\gamma(k)\right| \equiv \left|\gamma_{Obj,0}(k) - \gamma_{Obj,Ch,0}(k)\right| \leq \sigma_2 \qquad (4)$$

mit einem Schwellenwert $\sigma_2$ gilt, wird eine Geradeausfahrt festgestellt. Eine Kurvenfahrt oder ein Spurwechsel des Umfeldobjekts 104 wird festgestellt, wenn gilt:

$$\left|\Delta\gamma(k)\right| > \sigma_2 \qquad (5)$$

Eine Unterscheidung zwischen einer Kurvenfahrt und einem Spurwechsel erfolgt anhand einer Auswertung der Veränderung der Längs- und Quergeschwindigkeiten des Umfeldobjekts 104 im charakteristischen Achsenkreuz 401. Wenn die charakteristische Längsgeschwindigkeit abnimmt und die charakteristische Quergeschwindigkeit zunimmt, d.h. wenn

$$\Delta v_{x,Obj,C}(k) \equiv v_{x,Obj,C}(k) - v_{x,Obj,C}(k-1) < -\sigma_3 \quad \text{und} \qquad (6)$$

$$\Delta v_{y,Obj,C}(k) \equiv v_{y,Obj,C}(k) - v_{y,Obj,C}(k-1) > \sigma_4 \qquad (7)$$

mit vorgegebenen positiven Schwellenwerten $\sigma_3$ und $\sigma_4$ gilt, wird eine Kurvenfahrt festgestellt. Das Vorzeichen von $\Delta\gamma$ gibt dabei an, ob es sich um eine Links- oder Rechtskurve handelt, wobei eine Linkskurve bei $\Delta\gamma(k) > 0$ und eine Rechtskurve bei $\Delta\gamma(k)<0$ festgestellt wird.

Bei einem Spurwechsel ändert sich der Kurswinkel des Umfeldobjekts 104 schnell, wobei die Änderungsrate von der Geschwindigkeit des Umfeldobjekts 104 abhängt (es ist unmittelbar klar, dass die Änderungsrate des Kurswinkels während eines Spurwechsels bei 30 m/s kleiner ist als die Änderungsrate während eines Spurwechsels bei einer Geschwindigkeit von 10 m/s). Daher wird zur Erkennung des Spurwechsels die Größe

$$K_{LC}(k) \equiv \Delta\gamma(k) \cdot v_{Obj,0}(k) \qquad (8)$$

ausgewertet, wobei mit $\gamma_{Obj,0}(k)$ der Betrag der Objektgeschwindigkeit im Zeitschritt k bezeichnet ist. Ein Spurwechsel wird dabei erkannt, wenn $|K_{LC}|$ in einem vorgegebenen Bereich liegt; andernfalls wird eine Kurvenfahrt festgestellt. Vorzugsweise wird ein Spurwechsel insbesondere festgestellt, wenn $|K_{LC}|$ zwischen 0,9 m/s und 4 m/s liegt (wobei $\Delta\gamma$ im Bogenmaß angegeben wird). Anhand des Vorzeichens von $K_{LC}$ bzw. $\Delta\gamma$ wird wiederum die Richtung ermittelt, in die der Spurwechsel erfolgt.

In der folgenden Tabelle werden die zuvor erläuterten Kriterien noch einmal zusammenfassend qualitativ dargestellt (0: ungefähr null, +: positiver Wert, -: negativer Wert, ++: hoher Wert):

| | $|K_{LC}|$ | $K_{LC}$ | $|\Delta\gamma|$ | $\Delta v_{x,Obj,C}$ | $\Delta v_{y,Obj,C}$ |
|---|---|---|---|---|---|
| Geradeausfahrt | 0 | | 0 | 0 | |
| Spurwechsel nach links | + | + | | | |
| Spurwechsel nach rechts | + | - | | | |
| Kurve nach links | ++ | + | + | - | + |
| Kurve nach rechts | ++ | - | + | - | + |

Nach der Erkennung des Fahrmanövers in der Manöverkennungseinrichtung 203 wird das Ergebnis an den Block 204 übergeben, in dem ein Modell zu Berechnung der Trajektorie in Abhängigkeit von dem festgestellten Fahrmanöver ausgewählt wird. Anhand des ausgewählten Modells werden die Positionen des Umfeldobjekts 104 bzw. seines Bezugspunktes prädiziert. Für jeden Prädiktionsschritt

$$k_n^p = k + \frac{n \cdot \Delta t_p}{T} \qquad (9)$$

wird die Position $(x_{Obj,0}, y_{Obj,0})$ berechnet, wobei $n = 1,...,N$ eine - positive Zahl und $\Delta t_p$ ein Prädiktionszeitintervall ist. Mit $T$ ist die Dauer eines Abtastschrittes bezeichnet. Die Prädiktion erfolgt rekursiv anhand folgender Beziehungen:

$$x_{Obj,0}(k_n^p) = x_{Obj,0}(k_{n-1}^p) + v_{x,Obj,0}(k_n^p) \cdot \Delta t_p \qquad (10)$$

$$y_{Obj,0}(k_n^p) = y_{Obj,0}(k_{n-1}^p) + v_{y,Obj,0}(k_n^p) \cdot \Delta t_p \qquad (11)$$

Anhand dieser Gleichungen werden ausgehend von der in dem Zeitschritt $k = k_0^p$ aus den Signalen des Umfeldsensors .102 ermittelten Position $(x_{Obj,0}(k), y_{Obj,0}(k))$ zu Beginn des erkannten Manövers sukzessive die Positionen in den Zeitschritten $k_1^p$ bis $k_N^p$ berechnet, wobei die Zeitdauer $N \cdot \Delta t_p$ einige Sekunden beträgt. Die Längs- und Quergeschwindigkeit des Umfeldobjekts 104 in den Gleichungen (10) und (11) werden in folgender Weise berechnet:

$$v_{x,Obj,0}(k_n^p) = v_{Obj,0}(k_n^p) \cdot \cos\left(\gamma_{Obj,0}(k_n^p)\right) \qquad (12)$$

$$v_{y,Obj,0}(k_n^p) = v_{Obj,0}(k_n^p) \cdot \sin\left(\gamma_{Obj,0}(k_n^p)\right) \tag{13}$$

Die Prädiktion der Objektgeschwindigkeit und des Kurswinkels des Umfeldobjekts 104 erfolgt in Abhängigkeit von dem erkannten Fahrmanöver und wird im Folgenden für die unterschiedenen Fahrmanöver beschrieben. Längs- und Querbewegung werden dabei wiederum getrennt voneinander betrachtet.

Im Hinblick auf die Längsbewegung werden eine Fahrt mit konstanter Geschwindigkeit und eine Notbremsung des Umfeldobjekts 104 unterschieden. Bei einer gleichförmigen Bewegung mit konstanter Geschwindigkeit gilt:

$$v_{Obj,0}(k_n^p) = v_{Obj,0}(k) \tag{14}$$

Bei einer Notbremsung des Umfeldobjekts 104 wird davon ausgegangen, dass sich die Geschwindigkeit des Umfeldobjekts 104 mit einer vorgegebenen Beschleunigung $a_{Obj,Ref}(k)<0$ verringert bis das Umfeldobjekt 104 in den Stillstand gelangt. Daher gilt hier:

$$v_{Obj,0}(k_n^p) = \begin{cases} v_{Obj,0}(k) + a_{Obj,Ref}(k) \cdot n \cdot \Delta t_p, & \text{falls } n \cdot \Delta t_p \leq -\dfrac{v_{Obj,0}(k)}{a_{Obj,Ref}(k)} \\ 0 & \text{sonst} \end{cases} \tag{15}$$

Der Anhalteweg bei dem Notbremsmanöver des Umfeldobjekts 104 beträgt nach dieser Berechnung

$$s_{brake} = -\frac{v_{Obj,0}^2(k)}{2 \cdot a_{Obj,Ref}(k)}$$

Im Hinblick auf die Querbewegung des Umfeldobjekts 104 werden eine Geradeausfahrt, eine Kurvenfahrt und ein Spurwechsel unterschieden. Bei einer Geradeausfahrt ändert sich der Kurswinkel nicht, d.h. es gilt:

$$\gamma_{Obj,0}(k_n^p) = \gamma_{Obj,0}(k) \tag{16}$$

Wenn ein Umfeldobjekt 104 eine Kurve durchfährt, gelangt es schnell aus dem Erfassungsbereich des Umfeldsensors 102 hinaus. Deshalb ist es nicht erforderlich, die Parameter der Kurve, wie etwa Radius und Winkelabschnitt, zu ermitteln. Zur Prädiktion wird daher der folgende einfache Ansatz verwendet:

$$\gamma_{Obj,0}(k_n^p) = \gamma_{Obj,0}(k) + p \cdot n \cdot \Delta t_p \tag{17}$$

Der Parameter $p$ hat dabei einen willkürlich gewählten Anfangswert, der durch den noch zu beschreibenden Korrekturalgorithmus angepasst werden kann.

Bei einem Spurwechsel wird angenommen, dass die Trajektorie des Umfeldobjekts 104 innerhalb des charakteristischen Achsenkreuzes 401 durch eine Sigmoidfunktion der Gestalt

$$y_{Obj,C}(x_{Obj,C}) = \frac{1}{b/d + c \cdot \exp(-d \cdot x_{Obj,C})} \tag{18}$$

beschrieben wird. Mit $b = d / B$ und $c = 1/B \cdot \exp(d \cdot C)$ kann dies auch geschrieben werden als:

$$y_{Obj,C}(x_{Obj,C}) = \frac{B}{1 + \exp\left(-d \cdot (x_{Obj,C} - C)\right)} \qquad (19)$$

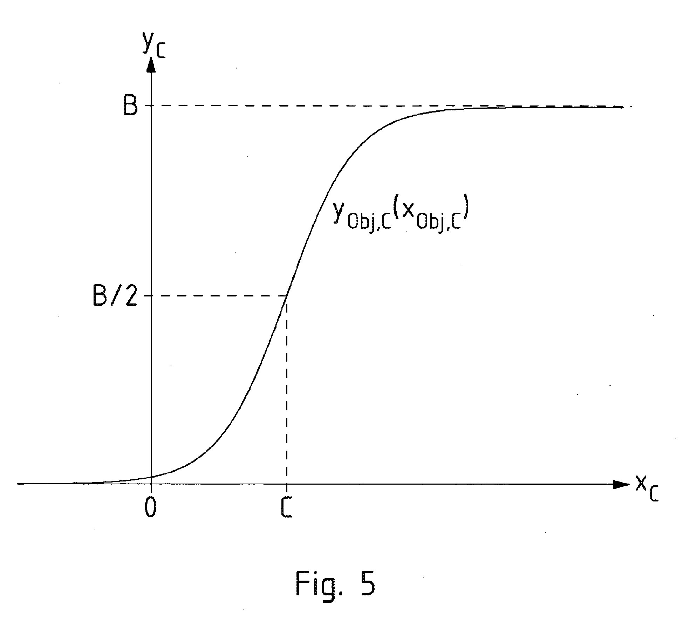

Die Funktion, die schematisch in Figur 5 dargestellt ist, hat eine Wendestelle bei $x_c{=}C$. Der Funktionswert an der Wendestelle beträgt $B/2$. Die Kurve ist ferner punktsymmetrisch um den Wendepunkt $(c,B/2)$ und es gilt:

$$y_{Obj,C}(x_{Obj,C}) \to 0 \ \text{ für } \ x_{Obj,C} \to -\infty$$

sowie

$$y_{Obj,C}(x_{Obj,C}) \to B \ \text{ für } \ x_{Obj,C} \to +\infty \ .$$

$B$ ist somit der laterale Querversatz des Umfeldobjekts 104 bei dem Manöver, der hier auch als Manöverbreite bezeichnet wird, und bei einem Spurwechsel der Spurbreite $D_{Lane}$ einer Fahrspur entspricht. Bei einem Spurwechsel nach links, d.h., in Richtung der positiven y-Achse, ist daher

$$\lim_{xObj,C \to \infty} y_{Obj,C}(x_{Obj,C}) - \lim_{xObj,C \to -\infty} y_{Obj,C}(x_{Obj,C}) \overset{!}{=} D_{Lane} , \qquad (20)$$

so dass für den Parameter $B_{left}$ der Sigmoide gilt:

$$B_{left} = \frac{d_{left}}{b_{left}} = D_{Lane} \qquad (21)$$

Ferner wird von einer Dauer $T_{change}$ und von einem Startzeitpunkt $t_{detect}$ für den Spurwechsel ausgegangen, wobei für die Dauer $T_{Change}$ ein typischer Wert vorgegeben wird, der allerdings ebenfalls durch den noch zu beschreibenden Korrekturalgorithmus angepasst werden kann. Da der gesamte laterale Querversatz nur in unendlicher Dauer des Manövers erreicht wird und die Sigmoide nicht genau durch den Ursprung des charakteristischen Achsenkreuzes 401 verläuft, wird eine kleine laterale Toleranz $y_{Tol}$ eingeführt, so dass gilt:

$$y_{Obj,C}\left(x_{Obj,C}(t_{detect})\right) = y_{Tol} \qquad (22)$$

$$y_{Obj,C}\left(x_{Obj,C}(t_{detect} - T_{Change})\right) = D_{Lane} - y_{Tol} \qquad (23)$$

Aufgrund der Konstruktion des charakteristischen Achsenkreuzes 401 ist $x_{Obj,C}(t_{detect}){=}0$. Damit folgt unter Verwendung von Gleichung (19):

$$c_{left} = \frac{1}{y_{Tol}} - \frac{1}{D_{Lane}} \qquad (24)$$

Ferner gilt unter Berücksichtigung, dass die Beträge der Objektgeschwindigkeit im absoluten Achsenkreuz 301 und im charakteristischen Achsenkreuz 401 gleich sind und unter Vernachlässigung der Geschwindigkeit des Umfeldobjekts 104 in die $y_C$-Richtung:

$$x_{Obj,C}(t_{detect} + T_{Change}) = x_{Obj,C}(t_{detect}) + v_{Obj,0}(t_{detect}) \cdot T_{Change}$$
$$= v_{Obj,0}(t_{detect}) \cdot T_{Change} \tag{25}$$

Unter Verwendung von Gleichung (20) ergibt sich hieraus für den Parameter $d$ der Sigmoidfunktion:

$$d_{left} = \frac{1}{T_{Change} \cdot v_{Obj,0}(t_{detect})} \ln\left(\frac{1}{c_{left}}\left[\frac{1}{D_{Lane} - y_{Tol}} - \frac{1}{D_{Lane}}\right]\right) \tag{26}$$

Anhand der Gleichungen (18), (21) und (22) ist die Sigmoidfunktion, die einen Spurwechsel nach links beschreibt, innerhalb des charakteristischen Achsenkreuzes vollständig festgelegt:

$$y_{Obj,C}(x_{Obj,C}) = \frac{1}{b_{left}/d_{left} + c_{left} \cdot \exp(-d_{left} \cdot x_{Obj,C})} \tag{27}$$

Für einen Spurwechsel nach rechts, d.h. in Richtung der negativen $y_C$-Achse, gilt entsprechend:

$$y_{Obj,C}(x_{Obj,C}) = \frac{1}{b_{right}/d_{right} + c_{right} \cdot \exp(-d_{right} \cdot x_{Obj,C})} \tag{28}$$

Die Parameter sind hier gegeben durch:

$$b_{right} = -b_{left}$$

$$c_{right} = -c_{left}$$

$$d_{right} = d_{left}$$

Der Kurswinkel des Umfeldobjekts 104 in dem charakteristischen Achsenkreuz 401 ist gegeben durch:

$$\gamma_{Obj,C}(x_{Obj,C}) = \arctan\left(\frac{dy_{Obj,C}}{dx_{Obj,C}}\right) = \arctan\left(\frac{c \cdot d \cdot \exp(-d \cdot x_{Obj,C})}{[b/d + c \cdot \exp(-d \cdot x_{Obj,C})]^2}\right) \tag{29}$$

Der zu berechnende Kurswinkel im Zeitschritt $k_n^P$ im absoluten Achsenkreuz ist gegeben durch:

$$\gamma_{Obj,0}(k_n^p) = \gamma_{Obj,0}(k) + \gamma_{Obj,C}\left(x_{Obj,C}(k_n^p)\right), \qquad (30)$$

Auch hier kann unter Vernachlässigung der Quergeschwindigkeit des Umfeldobjekts 104 in dem charakteristischen Achsenkreuz 401 näherungsweise $x_{Obj,C}(k_n^p) = v_{Obj,0}(k) \cdot n \cdot \Delta t_p$ gesetzt werden, so dass gilt:

$$\gamma_{Obj,0}(k_n^p) = \gamma_{Obj,0}(k) + \gamma_{Obj,C}\left(v_{Obj,0}(k) \cdot n \cdot \Delta t_p\right) \qquad (31)$$

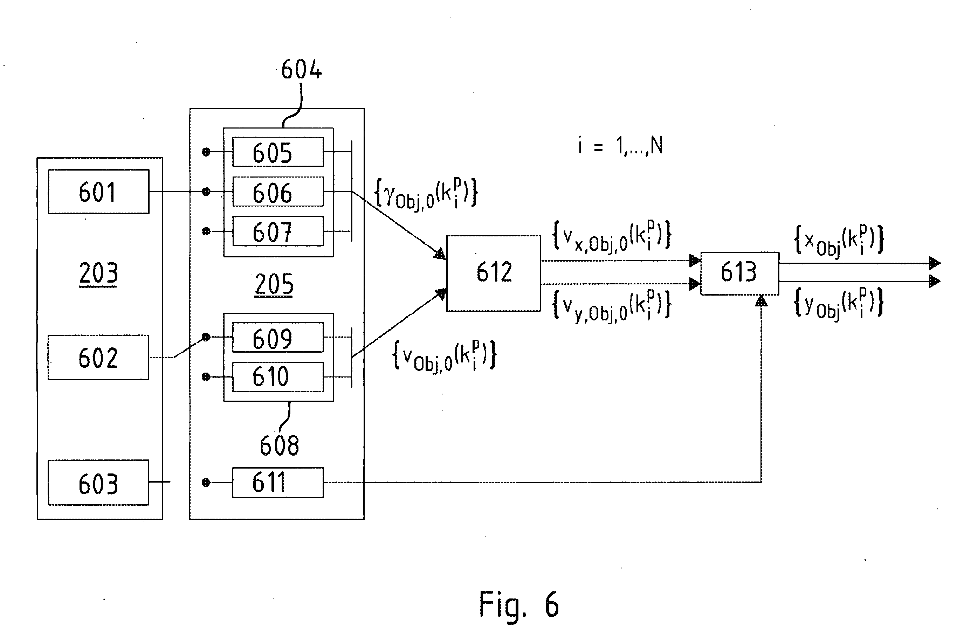

Zusammenfassend wird der Prädiktionsalgorithmus nun anhand von Figur 6 beschrieben. In der Manöverkennungseinrichtung 203 wird das von dem Umfeldobjekt 104 ausgeführte Fahrmanöver im Hinblick auf die Längs- und Querdynamik des Umfeldobjekts 104 identifiziert. Im Hinblick auf die Querdynamik, die in dem Block 601 analysiert wird, wird dabei zwischen einer Geradeausfahrt, einem Spurwechsel und einer Kurvenfahrt unterschieden und im Hinblick auf die Längsdynamik, die in dem Block 602 untersucht wird, zwischen einer Bewegung mit konstanter Geschwindigkeit und einem Notbremsmanöver. Ferner wird gegebenenfalls auch festgestellt, dass sich das Umfeldobjekt 104 nicht bewegt (Block 603). In Abhängigkeit von dem identifizierten Manöver wird dann in der Prädiktionseinrichtung 205 die Bewegung des Umfeldobjekts 104 prädiziert. Im Hinblick auf die Querdynamik geschieht dies in dem Block 604, in dem die Kurswinkel des Umfeldobjekts 104 für die Prädiktionsschritte $k_1^p, ..., k_N^p$ berechnet werden. Hierzu sind insbesondere die Blöcke 605, 606 und 607 vorgesehen, in denen die Kurswinkel anhand eines Modells entsprechend des identifizierten querdynamischen Manövers ermittelt werden. Falls eine Geradeausfahrt identifiziert worden ist, erfolgt die Berechnung dabei in dem Block 605, im Falle eines Spurwechsels in dem Block 606 und im Falle einer Kurve in dem Block 607. Im Hinblick auf die Längsdynamik erfolgt die Prädiktion der Objektbewegung in dem Block 608, ebenfalls anhand eines Modells, das entsprechend des identifizierten längsdynamischen Manövers ausgewählt wird. Insbesondere werden dabei die Geschwindigkeiten des Umfeldobjekts 104 in den Prädiktionsschritten $k_1^p, ..., k_N^p$ berechnet, was im Falle einer Bewegung mit konstanter Geschwindigkeit in dem Block 609 geschieht und im Falle einer Notbremsung in dem Block 610. Wurde festgestellt, dass sich das Umfeldobjekt 104 nicht bewegt, erfolgt die Prädiktion der "Bewegung" in dem Block 611.

Die Kurswinkel $\left\{\gamma_{Obj,0}(k_i^p)\right\}$, $i=1,....,N$, die in dem Block 604 berechnet werden sowie die innerhalb des Blocks 608 berechneten Geschwindigkeiten $\left\{v_{Obj,0}(k_i^p)\right\}$, $i =1,...,N$, werden dem Block 612 übergeben. In diesem Block werden anhand der Gleichungen (12) und (13) die Längs- und Quergeschwindigkeiten $\left\{v_{x,Obj,0}(k_i^p)\right\}$ und $\left\{v_{y,Obj,0}(k_i^p)\right\}$, $i =1,...,N$, des Umfeldobjekts 104 bestimmt. Dann werden in dem Block 613 sukzessive anhand der Gleichungen (10) und (11) die Positionen $\left(x_{Obj,0}(k_1^p), y_{Obj,0}(k_1^p)\right)$ bis $\left(x_{Obj,0}(k_N^p), y_{Obj,0}(k_N^p)\right)$ des Umfeldobjekts 104 in den Prädiktionsschritten $k_1^p, ..., k_N^p$ und damit die Trajektorie des Umfeldobjekts 104 ermittelt. Im Falle eines stehenden Umfeldobjekts 104 gilt dabei

$$x_{Obj,0}(k_1^p) = ... = x_{Obj,0}(k_N^p) = x_{Obj,0}(k) \qquad (28)$$

$$y_{Obj,0}(k_1^p) = ... = y_{Obj,0}(k_N^p) = y_{Obj,0}(k) \qquad (29)$$

Anhand des zuvor dargestellten Vorgehens ist eine Prädiktion der Objekttrajektorie möglich. Es hat sich jedoch gezeigt, dass die Ergebnisse, die insbesondere Ungenauigkeiten aufgrund der Messfehler des Umfeldsensors 102 aufweisen, dadurch verbessert werden können, dass die Prädiktion in jedem Abtastschritt $k$ anhand der erfassten Informationen über das Umfeldobjekt 104 angepasst wird. Die Anpassung erfolgt vorzugsweise nach dem Prinzip der Fehlerdiagnose und Fehlerbehebung. Zunächst wird die prädizierte Position des vorangegangenen Prädiktionsschritts mit der gemessenen Position in dem aktuellen Abtastschritt verglichen. Wird dabei eine erhebliche Abweichung festgestellt, so ist das Fahrmanöver des Umfeldobjekts 104 nicht korrekt identifiziert bzw. das identifizierte Manöver beendet worden. In diesem Fall erfolgt ein Reset und die Identifikation des aktuellen Fahrmanövers des Umfeldobjekts 104 beginnt unabhängig von den zuvor gespeicherten Daten über das Manöver erneut. Bis das korrekte Manöver identifiziert worden ist, wird die Bahn des Umfeldobjekts 104 anhand der Eulerschen Extrapolation prädiziert. Ist die Abweichung zwischen der prädizierten und der gemessenen Position nur gering, so wird die Prädiktion angepasst. Insbesondere erfolgt hier bei einer Kurvenfahrt des Umfeldobjekts 104 eine Anpassung des Kurvenparameters $p$ in Gleichung (17). Bei einem Spurwechsel des Manövers erfolgt eine Anpassung der Parameter $D_{Lane}$ und $T_{Change}$ der Sigmoidfunktion.

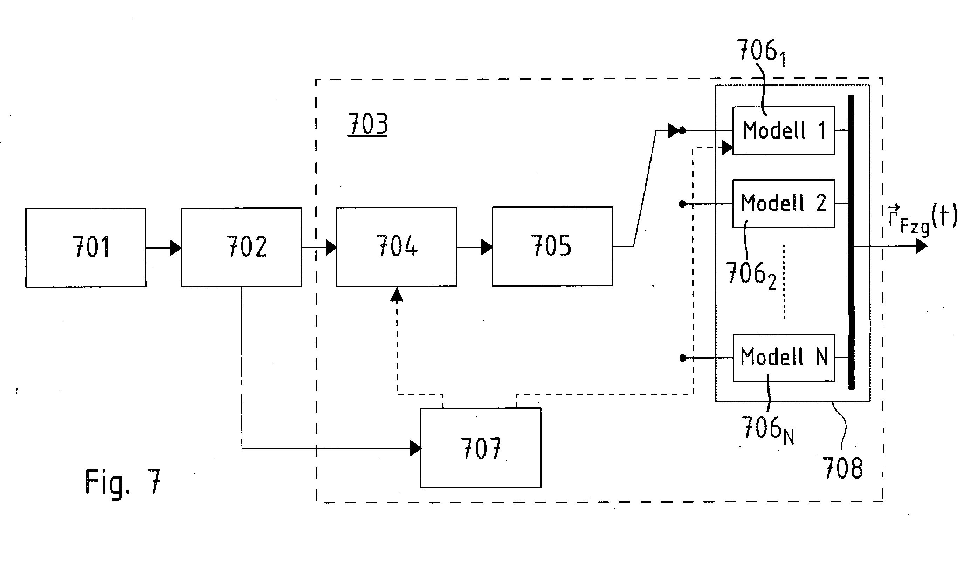

Nach dem zuvor dargestellten Prinzip der modellbasierten Prädiktion wird auch die Bewegungstrajektorie des Fahrzeugs 101 selbst ermittelt. Eine Einrichtung zur Durchführung der Prädiktion ist in Figur 7 schematisch anhand eines Blockdiagramms dargestellt. Der Bewegungszustand des Kraftfahrzeugs 101 wird mithilfe der Fahrzeugsensorik 701 ermittelt, die beispielsweise Raddrehzahlsensoren, einen Längs- und Querbeschleunigungssensor, einen Gierratensensor und einen Lenkwinkelsensor umfasst. Die Sensorsignale werden in dem Block 702 ausgewertet. Ferner können Bewegungsgrößen, die einer direkten Messung nicht zugänglich sind, in dem Block 702 aus den Sensorsignalen geschätzt werden. Die ermittelten Bewegungsgrößen des Fahrzeugs 101 werden einer Prädiktionseinheit 703 zugeführt, deren grundsätzliche Struktur in Figur 7 ebenfalls dargestellt ist. Sie enthält eine Fahrmanöverkennungseinrichtung 704, in der anhand der Bewegungsgrößen Fahrmanöver des Fahrzeugs 101 identifiziert werden. Die Fahrmanövererkennungseinrichtung 704 ist signalmäßig mit dem Block 705 verbunden, in dem in Abhängigkeit von dem identifizierten Fahrmanöver eines von N Modellen zur Prädiktion der Trajektorie des Fahrzeugs 101 ausgewählt wird. Entsprechend des ausgewählten Fahrzeugmodells wird durch den Block 705 einer der Blöcke $706_1,..., 706_N$ der Prädiktionseinrichtung 708 aktiviert, in dem dann die prädizierte Bahn $\bar{r}_{Fzg}(t)$ des Bezugspunktes des Fahrzeugs 101 berechnet wird, die im Folgenden auch als Bahn oder Trajektorie Fahrzeugs 101 bezeichnet wird. In dem Block 707 werden die prädizierten Positionen Fahrzeugs 101 mit den anhand der Fahrzeugsensorik 701 ermittelten Positionen des Fahrzeugs 101 verglichen. Sind die Abweichungen sehr groß, ist davon auszugehen, dass das Fahrmanöver nicht richtig identifiziert worden ist. In diesem Fall wird ein Signal an die Fahrmanövererkennungseinrichtung 704 gesendet, das zu einem Reset führt. Nach dem Reset erfolgte eine erneute Identifikation des aktuellen Fahrmanövers ohne Zugriff auf die zuvor über das Manöver gespeicherten Daten. Bei kleinen Abweichungen zwischen der prädizierten und der gemessenen Position werden Parameter des verwendeten Prädiktionsmodells angepasst, um die Prädiktion zu verbessern. Die Bestandteile 702-708 des Systems sind ebenfalls als Softwarekomponenten eines Computerprogramms ausgebildet, das in einer Mikroprozessoreinheit des Fahrzeugs 101 ausgeführt wird.

Wie bei der Prädiktion der Objekttrajektorie werden Längs- und Querdynamik des Fahrzeugs 101 hinsichtlich der Manöveridentifikation getrennt voneinander betrachtet. Bezüglich der Längsdynamik wird beispielsweise anhand der Signale der Raddrehzahlsensoren, der Signale eines Längsbeschleunigungssensors und/oder anhand von Informationen über den Betätigungszustand des Fahrpedals und der Fahrzeugbremse zwischen einem Beschleunigungsmanöver, einer gleichförmigen Bewegung und einem Bremsmanöver unterschieden. Bezüglich der Querdynamik werden Geradeausfahrten, Kurvenfahrten und Spurwechsel unterschieden.

Eine Geradeausfahrt wird dann erkannt, wenn die Gierrate $\dot{\psi}$ oder der Lenkwinkel $\delta_H$ betragsmäßig vorgegebene Schwellenwerte $k_{d\psi/dt}$ bzw. $k_{\delta_H}$ nicht überschreiten, d.h. wenn gilt:

$$\left|\dot{\psi}\right| \leq k_{d\psi/dt} \quad \text{oder} \quad \left|\delta_H \leq k_{\delta_H}\right| \qquad (30)$$

Im Hinblick auf eine Kurvenfahrt und einen Spurwechsel wurde festgestellt, dass eine Auswertung des Produkts aus dem Lenkwinkel an den lenkbaren Rädern des Fahrzeugs 101 und der Gierrate des Fahrzeugs 101 eine Unterscheidung zwischen diesen Fahrmanövern bereits in ihrer Anfangsphase zulassen. Es hat sich dabei gezeigt, dass eine Kurvenfahrt festgestellt werden kann, wenn

$$\delta_H \cdot \dot{\psi} \geq k_{\delta_h\dot{\psi}} \quad \text{oder} \quad \left|\psi - \psi_{Start}\right| \geq k_\psi \qquad (31)$$

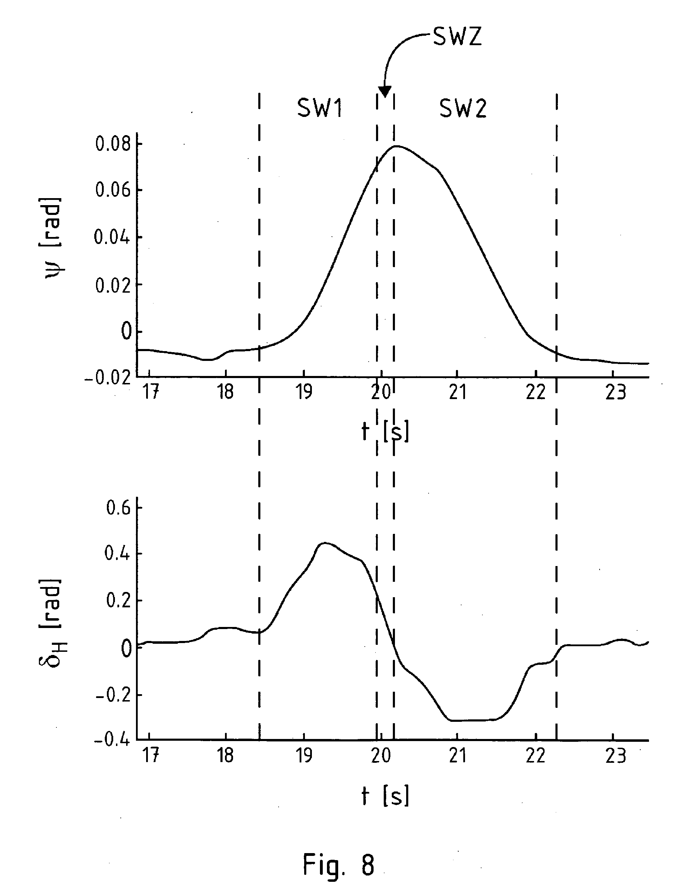

gilt, wobei $k_{\delta_H\psi}$ und $k_\psi$ vorgegebene Schwellenwerte sind und $\psi_{Start}$ den Gierwinkel des Fahrzeugs 101 zu Beginn des Fahrmanövers bezeichnet, der in einem Speicher hinterlegt wird, wenn das Manöver anhand der ersten Bedingung in (31) erkannt worden ist. Ein Spurwechsel wird erkannt, wenn weder eine Geradeausfahrt noch eine Kurvenfahrt festgestellt worden ist. Um die Robustheit der Erkennung zu verbessern, werden Spurwechsel zudem in drei Phasen unterteilt. In Phase 1 (SW1) wird das Fahrzeug 101 ausgehend von der momentanen Spur in Richtung der gewünschten Spur gelenkt. Während einer Zwischenphase (SWZ) bewegt sich das Fahrzeug 101 im Wesentlichen geradlinig. Die Zwischenphase ist in der Regel wesentlich kürzer als die übrigen Phasen und geht über in die Phase 2 (SW2) des Spurwechsels. In der Phase 2 wird das Fahrzeug 101 wieder parallel zu der Ausgangsrichtung vor Beginn des Spurwechsels gedreht. Der Gierwinkel des Fahrzeugs 101 vergrößert sich betragsmäßig in Phase 1, bleibt in der Zwischenphase im Wesentlichen konstant und geht in Phase 2 wieder auf den ursprünglichen Wert zurück. Die zeitlichen Verläufe des Gierwinkels $\psi$ und des Lenkwinkels $\delta_H$ sowie die Zuordnung zu den Phasen des Spurwechsels sind in Figur 8 für einen beispielhaft untersuchten Spurwechsel dargestellt.

Die Phase 1 des Spurwechsels wird erkannt, wenn anhand der Bedingungen (30) und (31) weder eine Geradeausfahrt noch eine Kurvenfahrt erkannt worden ist. Nach der Erkennung des Spurwechsels werden die Änderungsrate des Gierwinkels, d.h. die Gierrate des Fahrzeugs 101, sowie der Lenkwinkel überwacht. Sinken die Gierrate und der Lenkwinkel unter vorgegebene Schwellenwerte, wird ein Übergang in die Zwischenphase erkannt. Nach einem Vorzeichenwechsel der Gierrate und nachdem Gierrate und Lenkwinkel die Schwellenwerte betragsmäßig wieder überschritten haben, wird ein Übergang von der Zwischenphase in Phase 2 festgestellt. Da zu Beginn des Manövers oftmals keine klare Unterscheidung zwischen einer Kurvenfahrt und einem Spurwechsel getroffen werden kann, werden zusätzlich Abbruchbedingungen hinsichtlich der Dauer der einzelnen Phasen des Spurwechsels vorgegeben. Sind diese Abbruchbedingungen erfüllt, wird anstelle des Spurwechsels eine Kurvenfahrt oder eine Geradeausfahrt erkannt. Eine erste Abbruchbedingung ist dabei erfüllt, wenn die Dauer der Phase 1 kleiner als ein Schwellenwert $T_{SW1.min}$ ist:

$$t - t_{SW1.Start} < T_{SW1,min} \qquad (32)$$

$t_{SW1,Start}$ ist dabei der Zeitpunkt, in dem der Beginn Spurwechsels erkannt worden ist, und die Größe $t - t_{SW1,Start}$ entspricht der Zeitdauer der Phase 1 des Spurwechsels im Beobachtungszeitpunkt $t$. Die zweite Abbruchbedingung, ist erfüllt, wenn die Dauer der Phase 1 des Spurwechsels größer als ein Schwellenwert $T_{SW1,max}$ ist:

$$t - t_{SW1,Start} > T_{SW1,max} \qquad (33)$$

Eine dritte Abbruchbedingung ist erfüllt, wenn die Dauer der Zwischenphase des Spurwechsels größer als ein Schwellenwert $T_{SWZ,max}$ ist:

$$t - t_{SWZ,Start} > T_{SWZ,max} \qquad (34)$$

$t_{SWZ,Start}$ ist dabei der Zeitpunkt, in dem der Beginn der Zwischenphase des Spurwechsels erkannt worden ist, und die Größe $t - t_{SWZ,Start}$ entspricht der Zeitdauer der Zwischenphase des Spurwechsels im Beobachtungszeitpunkt $t$.

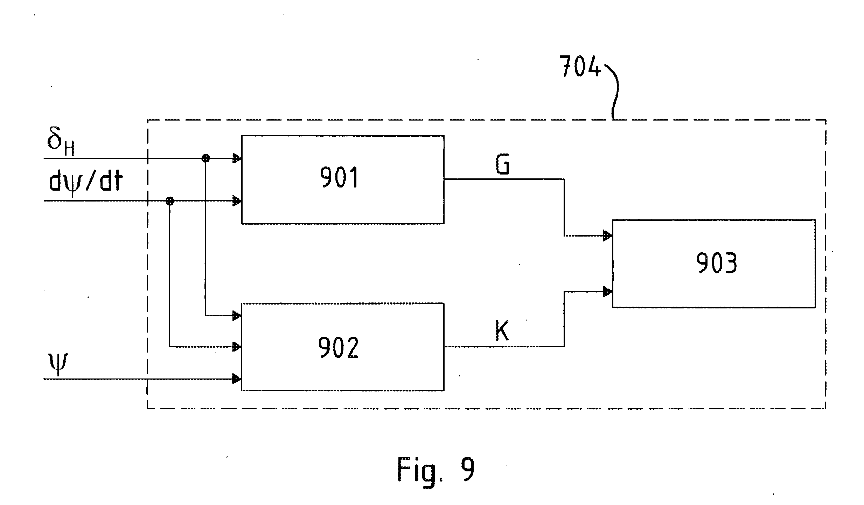

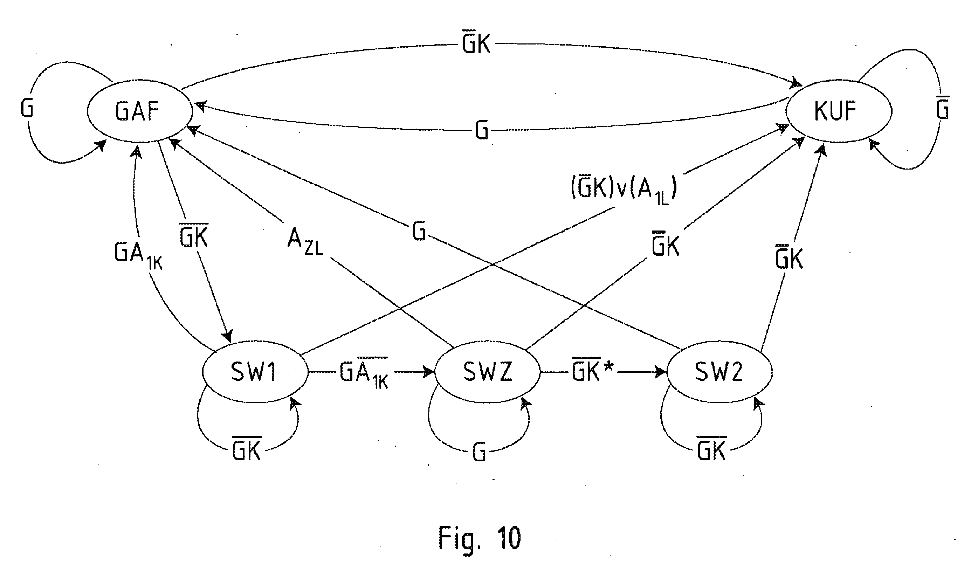

Wie in Figur 9 anhand eines schematischen Blockdiagramms der Fahrmanövererkennungseinrichtung 704 veranschaulicht ist, wird zur Identifizierung des Fahrmanövers des Fahrzeugs 101 in dem Block 901 bzw. dem Block 902 ermittelt, ob die Bedingungen für eine Geradeausfahrt (G) oder eine Kurvenfahrt (K) erfüllt sind. In dem Block 903 wird das Fahrmanöver unter Heranziehung dieser Ergebnisse und unter Heranziehung der Abbruchbedingungen ermittelt. Dies geschieht anhand eines Zustandsdiagramms, das in Figur 10 dargestellt ist. In dem Diagramm sind die Übergangsbedingungen zwischen der Erkennung einer Geradeausfahrt (GAF), einer Kurvenfahrt (KUF) und den drei Phasen eines Spurwechsels (SW1, SWZ, SW2) dargestellt. Die Übergangsbedingungen sind in der Figur in der folgenden Weise bezeichnet:

$G$: In Block 901 wurde eine Geradeausfahrt erkannt.
$\overline{G}$ : In Block 901 wurde keine Geradeausfahrt erkannt.
$K$: In Block 902 wurde eine Kurvenfahrt erkannt.
$\overline{K}$ : In Block 902 wurde keine Kurvenfahrt erkannt.
$A_{1K}$: Die Abbruchbedingung (32) ist erfüllt.
$\overline{A}_{1K}$: Die Abbruchbedingung (32) ist nicht erfüllt.
$A1_L$: Die Abbruchbedingung (33) ist erfüllt.
$A_{ZL}$: Die Abbruchbedingung (34) ist erfüllt.

Falls es in der Figur nicht durch ein v-Zeichen angegeben ist, müssen einzelne Bedingungen für einen Zustandsübergang kumulativ erfüllt sein. Der Stern am Übergang von der Zwischenphase zur Phase 2 des Spurwechsels bedeutet, dass das Vorzeichen der Gierrate entgegengesetzt zu dem Vorzeichen der Gierrate beim Übergang von einer Geradausfahrt in Phase 1 des Spurwechsels sein muss.

Im Gegensatz zu der Prädiktion der Objekttrajektorie werden bei der Prädiktion der Trajektorie des Fahrzeugs 101 die x-und y-Koordinaten des Bezugspunktes M des Fahrzeugs 101 direkt berechnet. Die Prädiktion erfolgt zunächst bezogen auf das Fahrzeugkoordinatensystem 302. Dann wird die Prädiktion in das absolute Koordinatensystem 301 transformiert. Falls eine Geradeausfahrt des Fahrzeugs 101 erkannt worden ist, so wird eine verschwindende Quergeschwindigkeit des Fahrzeugs 101 angenommen, so dass

$$y_V(t + T_p) = 0 \qquad\qquad (35)$$

gilt, wobei mit $T_p$ der Prädiktionszeitraum bezeichnet ist, der wiederum einige Sekunden beträgt. Für die x-Koordinate des Bezugspunktes M des Fahrzeugs 101 gilt:

$$x_V(t + T_p) = v_{x,V}(t) \cdot T_p + \frac{1}{2} \cdot a_{x,V}(t) \cdot T_p^2 \qquad\qquad (36)$$

Vorzugsweise wird die beispielsweise mit einem Längsbeschleunigungssensor gemessene oder aus den Signalen der Raddrehzahlsensoren ermittelte Längsbeschleunigung $a_x$ des Fahrzeugs 101 schwach tiefpassgefiltert, wenn ein Beschleunigungs- oder Bremsvorgang erkannt worden ist. Ist dies nicht der Fall, wird das Längsbeschleunigungssignal vorzugsweise stark tiefpassgefiltert. Hierdurch wird erreicht, dass das Rauschen des Beschleunigungssignals bei Fahrten mit nahezu konstanter Geschwindigkeit unterdrückt wird, bei Geschwindigkeitsänderungen jedoch die gesamte Dynamik des Signals berücksichtigt wird. Die Längsgeschwindigkeit $v_{x,V}(t)$ des Fahrzeugs 101 in dem Fahrzeugachsenkreuz 302 im Beobachtungszeitpunkt $t$ entspricht der Längsgeschwindigkeit des Fahrzeugs im absoluten Achsenkreuz 301, da es sich bei dem Fahrzeugachsenkreuz 302 ebenfalls um eine ortsfestes Achsenkreuz handelt.

Für die erste Phase eines Spurwechsels und für die Zwischenphasen erfolgt die Prädiktion der Position anhand einer Eulerschen Prädiktion 2. Ordnung, so dass gilt:

$$x_V(t + T_p) = v_{x,V}(t) \cdot T_p + \frac{1}{2} \cdot a_{x,V}(t) \cdot T_p^2 \qquad\qquad (37a)$$

$$y_V(t + T_p) = v_{y,V}(t) \cdot T_p + \frac{1}{2} \cdot a_{y,V}(t) \cdot T_p^2 \qquad\qquad (37b)$$

Zudem wird die Trajektorie des Fahrzeugs 101 während der ersten Phase des Spurwechsels aufgezeichnet und durch ein Polynom dritten Grades angenähert. Das Polynom wird dabei in einem Spurwechselkoordinatensystem angegeben, das analog zu dem charakteristischen Achsenkreuz 401 für das Umfeldobjekt 104 definiert ist. Es handelt sich dabei somit um ein ortsfestes Achsenkreuz, dessen Ursprung der Position des Bezugspunktes des Fahrzeugs 101 zu Beginn des Spurwechsels entspricht, und das für die Dauer des Spurwechsels innerhalb des absoluten Achsenkreuzes 301 fixiert wird. Größen, die sich auf das Spurwechselachsenkreuz beziehen, werden im. Folgenden mit einem Index "Spur" gekennzeichnet. Das Polynom hat somit die Form

$$y_{Spur}(t) = c_0 + c_1 \cdot x_{Spur}(t) + c_2 \cdot x_{Spur}^2(t) + c_3 \cdot x_{Spur}^3(t) \qquad\qquad (38)$$

Die Parameter $c_i$, $i = 1,...,3$ werden durch ein Parameterschätzverfahren, wie beispielsweise das rekursive DSFI-Verfahren (**D**iscrete **S**quare **R**oot **F**ilter in the **I**nformation Form), ermittelt. Um dabei die erste Phase des Spurwechsels vollständig zu berücksichtigen, wird der "Vergessensfaktor" des Verfahrens zu λ=1 gesetzt, so dass alle Messwerte gleich gewichtet werden.

Es wird angenommen, dass die zweite Phase des Spurwechsels spiegelverkehrt zu der ersten Phase verläuft. Daher kann die zweite Phase des Spurwechsels durch das an dem Endpunkt der ersten Phasen um 180˚ gedrehte und an den Endpunkt der Zwischenphase angesetzte Polynom (38) prädiziert werden. Es gilt somit:

$$y_{Spur}(t + T_p) = y_{Spur,EndZ} + y_{Spur,End1} -$$
$$\left[ c_0 + c_1 \cdot x_H(t + T_p) + c_2 \cdot x_H^2(t + T_p) + c_3 \cdot x_H^3(t + T_p) \right] \qquad (39)$$

wobei der Punkt $(x_{Spur,End1}, y_{Spur,End1})$ die Position des Bezugspunktes des Fahrzeugs 101 bei Abschluss der ersten Phasen des Spurwechsels ist und der Punkt $(x_{Spur,EndZ}, y_{Spur,EndZ})$ die Position des Bezugspunktes des Fahrzeugs 101 nach Abschluss der Zwischenphase des Spurwechsels angibt. Die Größe $x_H$ ist gegeben durch

$$x_H(t + T_p) = \begin{cases} x_{HH}(t + T_p) & \text{für } x_{HH}(t + T_p) > 0 \\ 0 & \text{sonst} \end{cases} \qquad (40)$$

mit

$$x_{HH}(t + T_p) = x_{Spur,End1} - \left( x_{Spur}(t + T_p) - x_{Spur,EndZ} \right) \qquad (41)$$

Die x-Koordinate $x_{spur}(t+T_p)$ wird dabei anhand von Gleichung (37a) berechnet, wobei das anhand der Gleichung berechnete Ergebnis in das Spurwechselkoordinatensystem transformiert wird.

Zur Prädiktion der Fahrzeugtrajektorie bei einer erkannten Kurvenfahrt des Fahrzeugs 101 werden die Länge des gefahrenen Kreisbogens und dessen Radius betrachtet. Es hat sich gezeigt, dass der Kreisbogen als Gerade approximiert werden kann, um seine Länge zu ermitteln. Für die Länge des Kreisbogens gilt daher hier:

$$\Delta u(T_p) = \sqrt{\left( v_{x,V}(t) \cdot T_p + \tfrac{1}{2} \cdot a_{x,V}(t) \cdot T_p^2 \right)^2 + \left( v_{y,V}(t) \cdot T_p + \tfrac{1}{2} \cdot a_{y,V}(t) \cdot T_p^2 \right)^2} \qquad (42)$$

Unter Vernachlässigung des Schwimmwinkels gilt für eine Fahrt des Fahrzeugs 101 mit konstanter Geschwindigkeit auf einem Kreis mit dem Radius **R** unter Zugrundelegung eines Einspurmodells des Fahrzeugs 101:

$$R = \frac{v^2}{a_{y,V}} \qquad (43)$$

Die Geschwindigkeit des Fahrzeugs 101 kann hier beispielsweise wiederum anhand der Signale der Raddrehzahlsensoren ermittelt werden und die Querbeschleunigung $a_{y,V}$ kann beispielsweise mithilfe eines Querbeschleunigungssensors bestimmt werden. Die prädizierten Koordinaten ergeben sich bei einer Kurvenfahrt zu

$$x_V(t + T_p) = R \cdot \sin\left( \frac{\Delta u(T_p)}{R} \right) \qquad (44a)$$

$$y_r(t + T_p) = R \cdot \left[ 1 - \cos\left( \frac{\Delta u(T_p)}{R} \right) \right] \qquad (44b)$$

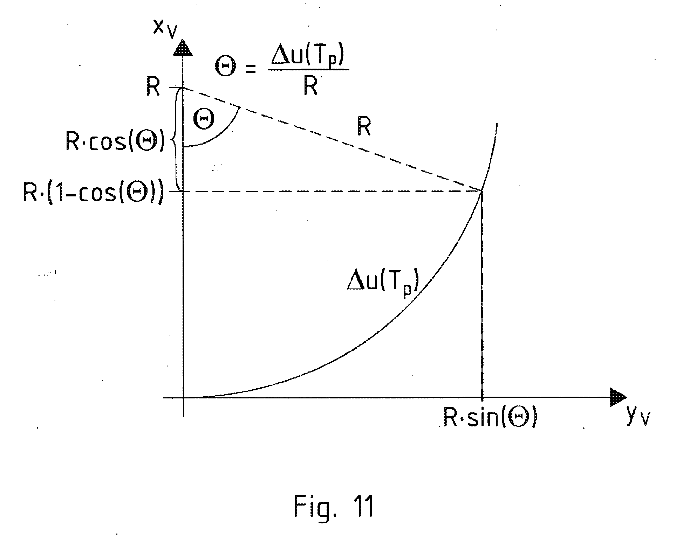

wie sich aus der Skizze in Figur 11 erkennen lässt. Der Radius und die Kurvenlänge werden anhand der Gleichungen (42) und (43) ermittelt.

Anhand der prädizierten Bewegungstrajektorie des im Umfeld des Kraftfahrzeugs 101 erfassten Umfeldobjekts 104 und der Bewegungstrajektorie des Kraftfahrzeugs 101 kann nun ermittelt werden, ob eine Kollision zwischen dem Kraftfahrzeug 101 und einem Umfeldobjekt 104 droht. Hierzu wird die prädizierte Trajektorie des Umfeldobjekts 104 im Hinblick auf die Trajektorie des Bezugspunktes des Fahrzeugs 101 bewertet. Von einem Kollisionskurs wird ausgegangen, wenn die Trajektorien sich bis auf einen Abstand nähern, der die Breite des Fahrzeugs 101 und des Umfeldobjekts 104 berücksichtigt. Ferner wird die sogenannte Kollisionszeit (TTC, Time To Collision) ermittelt, d.h. die Zeitdauer bis zu der ermittelten Kollision mit dem Umfeldobjekt 104. Falls ein Kollisionskurs besteht und die Kollisionszeit einen bestimmten Wert unterschreitet, wird in einer Ausführungsform zunächst eine Fahrerwarnung ausgelöst, bei der es sich beispielsweise um eine optische, akustische und/oder haptische Warnung handeln kann. Anhand der Warnung wird der Fahrer auf die Gefahrensituation aufmerksam gemacht, so dass er rechtzeitig Maßnahmen zur Kollisionsvermeidung oder Kollisionsfolgenminderung einleiten kann. Insbesondere wenn die Kollisionszeit einen weiteren kleineren Wert unterschreitet, wird in einer Ausführungsform ein Auslösesignal an ein Sicherheitsmittelsteuerungssystem übermittelt, das passive Sicherheitsmittel, wie beispielsweise Airbags oder Gurtstraffer, steuert. Durch eine entsprechende Ansteuerung der passiven Sicherheitsmittel wird das Fahrzeug 101 für eine Kollision vorkonditioniert, so dass die Folgen der Kollision für die Fahrzeuginsassen reduziert werden. In einer weiteren Ausführungsform wird in einer Entscheidungsrichtung in Abhängigkeit von der vorliegenden Fahrsituation überprüft, ob die Kollision durch ein Bremsmanöver verhindert werden kann, oder ein Ausweichmanöver durchgeführt werden soll. Falls festgestellt wird, dass die Kollision durch ein Bremsmanöver verhindert werden kann, wird eine Entfernung zum Kollisionsort ermittelt, in der das Bremsmanöver gestartet werden muss. Erreicht das Fahrzeug 101 die ermittelte Entfernung wird automatisch ein Bremsdruck in den Radbremsen aufgebaut um das Manöver durchzuführen. Falls festgestellt wird, dass die Kollision durch ein Ausweichmanöver verhindert werden kann, wird ein Auslösesignal an eine Bahnvorgabeeinrichtung übermittelt. Das Auslösesignal führt in dieser Ausführungsform dazu, dass zunächst innerhalb der Bahnvorgabeeinrichtung eine Ausweichbahn y(x) berechnet wird, um die Kollision mit dem Umfeldobjekt 104 zu verhindern. Dann wird in Abhängigkeit von der ermittelten Ausweichbahn der Startpunkt bestimmt, an dem das Ausweichmanöver gestartet werden muss, um dem Umfeldobjekt 104 gerade noch ausweichen zu können. Die zuvor genannten Schritte werden in Zeitschritten vorzugsweise wiederholt, bis keine Kollisionsgefahr aufgrund von Kursänderungen des Umfeldobjekts 104 oder des Fahrzeugs 101 mehr besteht oder bis das Fahrzeug 101 den Startpunkt für ein Ausweichmanöver erreicht. Ist dies der Fall, wird die Ausweichbahn oder diese Bahn repräsentierende Parameter an eine Lenkungsaktuatorsteuerung übermittelt. Diese steuert dann anhand eines Regelverfahrens in einer bevorzugten Ausführungsform einen Lenkungsaktuator derart an, dass an den lenkbaren Rädern des Kraftfahrzeugs 101 Lenkwinkel eingestellt werden, die das Kraftfahrzeug 101 der Ausweichbahn folgen lassen. In einer weiteren Ausführungsform wird mittels des Lenkungsaktuators nach Maßgabe der berechneten Bahn ein Drehmoment auf eine von dem Fahrer bediente Lenkhandhabe aufgeprägt, wodurch der Fahrer eine Lenkempfehlung für ein Ausweichmanöver erhält.

Darüber hinaus kann die Prädiktion der Trajektorien des Umfeldobjekts 104 und des Fahrzeugs 101 innerhalb eines ACC-Systems (ACC: Adpative Cruise Control) genutzt werden. Dieses System regelt die Fahrzeuggeschwindigkeit so, dass ein bestimmter Abstand zu einem vorausfahrenden Fahrzeug nicht unterschritten wird. Anhand der Trajektorienprädiktion für das Fahrzeug und das Umfeldobjekt 104 und das eigene Fahrzeug 101 können bspw. auch Spurwechsel des Umfeldobjekts 104 und/oder des Fahrzeugs 101 bei der ACC-Regelung berücksichtigt, wobei es sich bei dem Umfeldobjekt 104 um ein weiteres Fahrzeug handelt. Bewegt sich ein solches Fahrzeug beispielsweise aufgrund eines Spurwechsels in die Fahrspur des Kraftfahrzeugs 101, kann dessen Geschwindigkeit schon frühzeitig angepasst werden.

Für die zuvor beschriebenen Anwendungen ist eine hinreichend genaue Prädiktion der Objekttrajektorie erforderlich. Um die verbesserte Prädiktionsqualität aufzuzeigen, die anhand des zuvor dargestellten Prädiktionsverfahrens erreicht werden kann, wurden mehrere Fahrsituationen simuliert. Da die Ergebnisse der Prädiktion nur unter sehr großem Aufwand mit einer hinreichend genau gemessenen Position eines Umfeldobjekts 104 verglichen werden können, wurde dabei ein anderer Ansatz verwendet. Zunächst wurden einige Testfahrten mit einem Kraftfahrzeug 101 durchgeführt. Während dieser Testfahrten wurden die Positionen des Fahrzeugs 101 in Bezug auf den Startpunkt aufgezeichnet; die Position des Anfahrens wurde von dem Fahrer bestimmt. Gierrate und Geschwindigkeit wurden ebenfalls gemessen. In einer Offline-Simulation wurden die aufgezeichneten Datensätze als Eingangsgrößen für ein Sensorsimulationsmodell verwendet, dessen Ausgangsgrößen das Format der Daten des Umfeldsensors 102 haben. Die simulierten Sensorendaten wurden dann als Eingangsgrößen für einen Prädiktionsalgorithmus verwendet, wobei zum einen der zuvor dargestellte Prädiktionsalgorithmus und zum anderen die Eulersche Prädiktion (Gleichung (1)) verwendet werden. Dann wurden die bei den Testfahrten gemessenen Daten mit den prädizierten Daten für beide Prädiktionsalgorithmen verglichen.

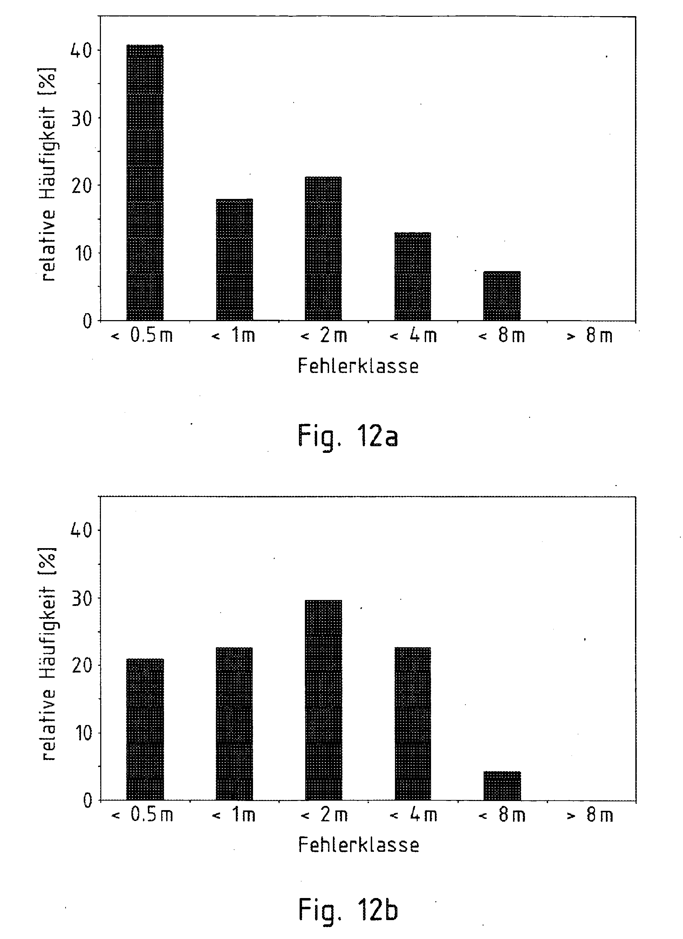

Die Ergebnisse des Vergleichs zwischen den Daten sind für den erfindungsgemäßen Prädiktionsalgorithmus in der Figur 12a dargestellt. Die Fehlerklassen des Histogramms entsprechen Intervallen für die Abweichung $\Delta$ zwischen der prädizierten Position und der gemessenen Position. Die Klassen wurden dabei entsprechend der folgenden qualitativen Klassifizierung gewählt:

1) $0 < \Delta < 0,5$ m: Sehr gute Prädiktion, mit der Kollisionen zuverlässig vorhergesagt werden können.

2) $0,5$ m $< \Delta < 1$ m: Noch gute Prädiktion, insbesondere für große Prädiktionszeiten. Es ist möglich, Kollisionen mit reduzierter Sicherheit vorherzusagen.

3) $1$m $< \Delta < 2$ m: Die Abweichung entspricht ungefähr der Breite eines PKW bzw. der halben Länge eines PKW und der halben Breite einer Fahrspur einer Autobahn. Es besteht nur noch eine begrenzte Möglichkeit, um Kollisionen vorherzusagen.

4) $2$ m $< \Delta < 4$ m: Die Abweichung entspricht in etwa der Länge eines PKW und der Breite einer Fahrspur einer Autobahn. Eine Kollisionsvorhersage ist nicht hinreichend genau möglich, um Maßnahmen zur Kollisionsvermeidung einzuleiten; wird eine Kollision vorhergesagt, kann jedoch eine Fahrerwarnung erfolgen.

5) $4$ m $< \Delta < 8$ m: Die Abweichung entspricht ungefähr der doppelten Länge eines PKW oder der doppelten Breite einer Autobahnspur. Die Prädiktion ist hier nur sinnvoll, um eine Vorstellung von der Situation zu erhalten. Maßnahmen zur Kollisionsvermeidung können jedoch nicht sinnvoll eingeleitet werden.

6) $\Delta > 8$ m: Die Abweichungen sind so groß, dass die Prädiktionsergebnisse nicht sinnvoll genutzt werden können.

Figur 12a zeigt dabei insbesondere die Ergebnisse des Vergleichs bei einem Spurwechsel des Umfeldobjekts 104 bei dem sich Umfeldobjekt 104 und Fahrzeug 101 jeweils mit einer Geschwindigkeit von 18 m/s bewegen. Das Umfeldobjekt 104 führt einen Spurwechsel mit einem Querversatz von 3,5m durch. Da die Geschwindigkeiten während des Manövers nahezu konstant sind, wird nur der Prädiktionsfehler der y-Komponente der Trajektorie des Umfeldobjekts 104 bewertet. Das Prädiktionsintervall betrug 3 Sekunden. Wie aus der Figur ersichtlich, sind mehr als 40% der Prädiktionsergebnisse in der Fehlerklasse $0 < \Delta < 0,5$ m, die für ein Kollisionsvermeidungssystem den größten Nutzen hat. Weiterhin ist die Abweichung $\Delta$ bei über 55% der Prädiktionsergebnisse kleiner als 1 m.
Figur 12b zeigt die Abweichungen zwischen den Prädiktionsergebnissen und den gemessenen Positionen für die Eulersche Extrapolation. Hier sind nur etwa 21% der Abweichungen kleiner als 0,5m und weniger als die Hälfte der Abweichungen sind kleiner als 1 m. Aus einem Vergleich der Figuren 12a und 12b wird die mit der Erfindung erzielte Verbesserung offensichtlich.

**Patentansprüche**

**1.** Verfahren zum Prädizieren einer Bewegungstrajektorie eines sich im Straßenverkehr bewegenden Objekts mit folgenden Schritten:

- Ermitteln wenigstens einer Bewegungsgröße des Objekts (101; 104),
**gekennzeichnet durch** die weiteren Schritte
- Ermitteln eines Fahrmanövers, das von dem Objekt (101; 104) ausgeführt wird, anhand einer Bewertung der ermittelten Bewegungsgröße,
- Auswählen eines Modells der Bewegung des Objekts (101; 104) in Abhängigkeit von dem ermittelten Fahrmanöver und
- Berechnen der Bewegungstrajektorie des Objekts (101; 104) anhand des ausgewählten Modells.

**2.** Verfahren nach Anspruch 1,
**dadurch gekennzeichnet,**
**dass** das Fahrmanöver des Objekts (101; 104) aus einer Menge von vorgegebenen Fahrmanövern ausgewählt wird.

**3.** Verfahren nach Anspruch 1 oder 2,
**dadurch gekennzeichnet,**
**dass** sich das ermittelte Fahrmanöver aus einem die Längsbewegung des Objekts (101; 104) beschreibenden Fahrmanöver und einem die Querbewegung des Objekts (101; 104) beschreibenden Fahrmanöver zusammensetzt.

**4.** Verfahren nach einem der vorangegangenen Ansprüche,
**dadurch gekennzeichnet,**
**dass** das die Querbewegung des Objekts (101; 104) beschreibende Fahrmanöver aus einer Menge ausgewählt wird, die wenigstens eine Geradeausfahrt, eine Kurvenfahrt und einen Spurwechsel umfasst.

**5.** Verfahren nach einem der vorangegangenen Ansprüche,
**dadurch gekennzeichnet,**
**dass** eine Unterscheidung zwischen einer Kurvenfahrt und einem Spurwechsel anhand einer charakteristischen Bewegungsgröße getroffen wird, die aus einer ersten Bewegungsgröße, die eine Änderung der Bewegungsrichtung des Objekts (101; 104) charakterisiert, und wenigstens einer zweiten Bewegungsgröße des Objekts (101; 104) gebildet wird.

**6.** Verfahren nach Anspruch 5,
**dadurch gekennzeichnet,**
**dass** es, sich bei der zweiten Bewegungsgröße des Objekts (101; 104) um eine Geschwindigkeit des Objekts (101; 104) handelt.

**7.** Verfahren nach Anspruch 5,
**dadurch gekennzeichnet,**
**dass** es sich bei der zweiten Bewegungsgröße um einen Lenkwinkel an lenkbaren Rädern des Objekts (101; 104) handelt.

**8.** Verfahren nach einem der vorangegangenen Ansprüche,
**dadurch gekennzeichnet,**
**dass** die Bewegungstrajektorie anhand des Modells in Abhängigkeit von wenigstens einem Parameter bestimmt wird.

**9.** Verfahren nach Anspruch 8,
**dadurch gekennzeichnet,**
**dass** eine anhand der Bewegungstrajektorie prädizierte Position des Objekts (101; 104) mit einer erfassten Position des Objekts (101; 104) verglichen wird, und dass der Parameter in Abhängigkeit von dem Ergebnis des Vergleichs angepasst wird.

**10.** Verfahren nach einem der vorangegangenen Ansprüche,
**dadurch gekennzeichnet,**
**dass** es sich bei dem Objekt (101; 104) um ein im Umfeld eines Kraftfahrzeugs (101) befindliches Umfeldobjekt (104) handelt, wobei die Bewegungsgröße des Umfeldobjekts (104) mittels eines Umfeldsensors (102) des Kraftfahrzeugs (101) ermittelt wird.

**11.** Verfahren nach einem der vorangegangenen Ansprüche,
**dadurch gekennzeichnet,**
**dass** das die Längsbewegung des Umfeldobjekts (104) beschreibende Fahrmanöver in Abhängigkeit von einem Vergleich von in den aufeinanderfolgenden Zeitpunkten vorliegenden Geschwindigkeiten des Objekts (104) aus einer Menge ermittelt wird, die wenigstens eine gleichförmige Bewegung und eine Notbremsung umfasst.

**12.** Verfahren nach einem der vorangegangenen Ansprüche,
**dadurch gekennzeichnet,**
**dass** eine Bewegungsrichtung des Umfeldobjekts (104) in aufeinanderfolgenden Zeitpunkten ermittelt wird, und dass das die Querbewegung des Umfeldobjekts (104) beschreibende Fahrmanöver anhand eines Vergleichs von aus den ermittelten Bewegungsrichtungen ermittelten Kurswinkeln bestimmt wird.

**13.** Verfahren nach einem der vorangegangenen Ansprüche,
**dadurch gekennzeichnet,**

**dass** das die Querbewegung des Umfeldobjekts (104) beschreibende Fahrmanöver anhand eines Vergleichs der Größe

$$\left(\gamma_{Obj,0}(t) - \gamma_{Obj,0}(t_0)\right) \cdot v_{Obj,0}$$

mit wenigstens einem Schwellenwert ermittelt wird, wobei $\gamma_{Obj,0}(t)$ den Kurswinkel in einem ortsfesten Achsenkreuz in einem Beobachtungszeitpunkt, $\gamma_{Obj,0}(t_0)$ den Kurswinkel in dem ortsfesten Achsenkreuz zu Beginn einer Veränderung des Kurswinkels und $v_{Obj,0}$ die Geschwindigkeit des Umfeldobjekts (104) bezeichnet.

14. Verfahren nach einem der vorangegangenen Ansprüche,
    **dadurch gekennzeichnet,**
    **dass** ein Spurwechsel des Umfeldobjekts (104) ermittelt wird, wenn sich der Kurswinkel des Umfeldobjekts (104) in einem vorgegebenen Maße ändert und wenn die Größe

$$\left(\gamma_{Obj,0}(t) - \gamma_{Obj,0}(t_0)\right) \cdot v_{Obj,0}$$

Werte innerhalb eines vorgegebenen Intervalls annimmt.

15. Verfahren nach Anspruch 14,
    **dadurch gekennzeichnet,**
    **dass** eine Kurvenfahrt des Umfeldobjekts (104) ermittelt wird, wenn sich der Kurswinkel des Umfeldobjekts (104) in einem vorgegebenen Maße ändert und wenn die Größe

$$\left(\gamma_{Obj,0}(t) - \gamma_{Obj,0}(t_0)\right) \cdot v_{Obj,0}$$

Werte außerhalb des vorgegebenen Intervalls annimmt.

16. Verfahren nach einem der vorangegangenen Ansprüche,
    **dadurch gekennzeichnet,**
    **dass** die Bewegungstrajektorie des Umfeldobjekts (104) anhand einer prädizierten Geschwindigkeit des Umfeldobjekts (104) und einem prädizierten Kurswinkel des Umfeldobjekts (104) ermittelt wird.

17. Verfahren nach einem der vorangegangenen Ansprüche,
    **dadurch gekennzeichnet,**
    **dass** die Bewegungstrajektorie des Umfeldobjekts (104) rekursiv berechnet wird, wobei eine Position des Umfeldobjekts (104) in einem Prädiktionsschritt anhand der prädizierten Geschwindigkeit und dem prädizierten Kurswinkel aus der in einem vorangegangenen Prädiktionsschritt ermittelten Position bestimmt wird.

18. Verfahren nach einem der vorangegangenen Ansprüche,
    **dadurch gekennzeichnet,**
    **dass** die prädizierte Geschwindigkeit des Umfeldobjekts (104) anhand des ausgewählten die Längsbewegung des Umfeldobjekts (104) beschreibenden Modells berechnet wird.

19. Verfahren nach einem der vorangegangenen Ansprüche,
    **dadurch gekennzeichnet,**
    **dass** der prädizierte Kurswinkel des Umfeldobjekts (104) anhand des ausgewählten die Querbewegung des Umfeldobjekts (104) beschreibenden Modells berechnet wird.

20. Verfahren nach einem der vorangegangenen Ansprüche,
    **dadurch gekennzeichnet,**
    **dass** der prädizierte Kurswinkel des Umfeldobjekts (104) nach Maßgabe einer Sigmoidfunktion berechnet wird, wenn als Fahrmanöver einer Spurwechsel festgestellt worden ist, wobei die Gestalt der Sigmoidfunktion durch wenigstens einen Parameter bestimmt wird, der in Abhängigkeit von der Geschwindigkeit des Umfeldobjekts (104) ermittelt wird.

21. Verfahren nach einem der vorangegangenen Ansprüche,
    **dadurch gekennzeichnet,**
    **dass** der für den Zeitpunkt $t + \Delta t$ prädizierte Kurswinkel $\gamma_{Obj,0}(t + \Delta t)$ des Umfeldobjekts (104) durch

$$\gamma_{Obj,0}(t + \Delta t) = \gamma_{obj,0}(t) + p \cdot \Delta t$$

berechnet wird, wenn als Fahrmanöver eine Kurvenfahrt festgestellt worden ist, wobei es sich bei der Größe $\gamma_{Obj,0}(t)$ um den Kurswinkel des Umfeldobjekts (104) in einem Beobachtungszeitpunkt $t$ handelt, $\Delta t$ ein Zeitintervall und $p$ ein-Parameter ist.

22. Verfahren nach einem der vorangegangenen Ansprüche,
    **dadurch gekennzeichnet,**
    **dass** es sich bei dem Objekt (101; 104) um das Kraftfahrzeug (101) handelt, wobei die Bewegungsgröße mittels wenigstens eines Fahrzeugsensors erfasst wird.

23. Verfahren nach einem der vorangegangenen Ansprüche,
    **dadurch gekennzeichnet,**
    **dass** das die Querbewegung des Kraftfahrzeugs (101) beschreibende Fahrmanöver anhand einer Gierrate des Kraftfahrzeugs und/oder anhand eines an lenkbaren Rädern des Fahrzeugs eingestellten Lenkwinkels ermittelt wird.

24. Verfahren einem der vorangegangenen Ansprüche,
    **dadurch gekennzeichnet,**
    **dass** eine Geradausfahrt (GAF) des Kraftfahrzeugs (101) ermittelt wird, wenn die Gierrate des Fahrzeugs und/oder der Lenkwinkel betragsmäßig kleiner als ein Schwellenwert sind.

25. Verfahren nach einem der vorangegangenen Ansprüche,
    **dadurch gekennzeichnet,**
    **dass** eine Kurvenfahrt (KUF) des Kraftfahrzeugs ermittelt wird, wenn das Produkt aus Lenkwinkel und Gierrate größer als ein vorgegebener Schwellenwert ist und/oder eine Gierwinkeländerung während des Fahrmanövers betragsmäßig größer als ein vorgegebener Schwellenwert ist.

26. Verfahren nach einem der vorangegangenen Ansprüche,
    **dadurch gekennzeichnet,**
    **dass** ein Spurwechsel des Kraftfahrzeugs (101) ermittelt wird, wenn keine Geradeausfahrt (GAF) und keine Kurvenfahrt (KUF) festgestellt werden.

27. Verfahren nach einem der vorangegangenen Ansprüche,
    **dadurch gekennzeichnet,**
    **dass** ein Spurwechsel in wenigstens drei aufeinander folgende Phasen aufgeteilt wird, wobei die Gierrate des Kraftfahrzeugs (101) in einer ersten Phase (SW1) betragsmäßig größer als ein Schwellenwert, in einer Zwischenphase (SWZ) betragsmäßig kleiner als ein Schwellenwert und in einer zweiten Phase (SW2) betragsmäßig größer als ein Schwellenwert ist und wobei die Gierrate in der ersten Phase (SW1) und der zweiten Phase (SW2) ein unterschiedliches Vorzeichen aufweist.

28. Verfahren nach einem der vorangegangenen Ansprüche,
    **dadurch gekennzeichnet,**
    **dass** für die erste Phase (SW1) eine maximale Dauer vorgegeben wird, und dass nach einer vorangegangenen Erkennung eines Spurwechsels eine Kurvenfahrt (KUF) des Kraftfahrzeugs (101) ermittelt wird, wenn die Dauer der ersten Phase die maximale Dauer übersteigt.

29. Verfahren nach einem der vorangegangenen Ansprüche,
    **dadurch gekennzeichnet,**
    **dass** für die erste Phase (SW1) eine minimale Dauer vorgegeben wird, und dass nach einer vorangegangenen Erkennung eines Spurwechsels eine Geradeausfahrt (GAF) ermittelt wird, wenn die Dauer der ersten Phase (SW1) die minimale Dauer unterschreitet.

30. Verfahren nach einem der vorangegangenen Ansprüche,
**dadurch gekennzeichnet,**
**dass** für die Zwischenphase (SWZ) des Spurwechsels eine maximale Dauer vorgegeben wird, und dass nach einer vorangegangenen Erkennung eines Spurwechsels eine Geradeausfahrt (GAF) ermittelt wird, wenn die Dauer der Zwischenphase (SWZ) die maximale Dauer übersteigt.

31. Verfahren nach einem der vorangegangenen Ansprüche,
**dadurch gekennzeichnet,**
**dass** die Bewegungstrajektorie des Kraftfahrzeugs (101) für die erste Phase eines Spurwechsels in Abhängigkeit von ermittelten Längs- und Quergeschwindigkeiten und/oder in Abhängigkeit von ermittelten Längs- und Querbeschleunigungen des Kraftfahrzeugs (101) anhand einer Eulerschen Prädiktion prädiziert wird.

32. Verfahren nach einem der vorangegangenen Ansprüche,
**dadurch gekennzeichnet,**
**dass** die Bewegungstrajektorie des Kraftfahrzeugs (101) während der ersten Phase (SW1) des Spurwechsels aufgezeichnet wird und durch ein Polynom angenähert wird, und dass das dabei ermittelte Polynom zur Prädiktion der Bewegungstrajektorie des Kraftfahrzeugs (101) für die zweite Phase (SW2) des Spurwechsels herangezogen wird.

33. Verfahren nach Anspruch 32,
**dadurch gekennzeichnet,**
**dass** die prädizierte Bewegungstrajektorie für die zweite Phase (SW2) des Spurwechsels dem ermittelten Polynom entspricht, das um 180° um einem Endpunkt der ersten Phase des Spurwechsels gedreht ist und das an die Bewegungstrajektorie des Kraftfahrzeugs (101) in der Zwischenphase (SWZ) des Spurwechsels angesetzt wird.

34. Verfahren nach Anspruch 32 oder 33,
**dadurch gekennzeichnet,**
**dass** es sich bei dem Polynom um ein Polynom dritten Grades handelt.

35. Verfahren nach einem der vorangegangenen Ansprüche,
**dadurch gekennzeichnet,**
**dass** die Bewegungstrajektorie des Kraftfahrzeugs (101) anhand einer prädizierten Länge eines Kreisbogens und einem Radius des Kreisbogens ermittelt wird, wenn es sich bei dem ermittelten Fahrmanöver um eine Kurvenfahrt (KUF) handelt.

36. Verfahren zum Verhindern einer Kollision zwischen einem Kraftfahrzeug und einem Umfeldobjekt im Umfeld des Kraftfahrzeugs oder zum Vermindern von Kollisionsfolgen, bei dem Bewegungstrajektorien des Kraftfahrzeugs und/oder des Umfeldobjekts ermittelt werden und aufgrund einer Bewertung der Bewegungstrajektorien ein Kollisionsort bestimmt wird, und bei dem in Abhängigkeit von der Entfernung von dem Kollisionsort kollisionsverhindernde und/oder kollisionsfolgenmindernde Maßnahmen eingeleitet werden,
**dadurch gekennzeichnet,**
**dass** die Bewegungstrajektorie des Umfeldobjekts (104) und/oder die Bewegungstrajektorie des Kraftfahrzeugs (101) anhand eines Verfahrens nach einem der vorangegangenen Ansprüche ermittelt werden.

37. Verfahren zum Regeln der Geschwindigkeit eines Kraftfahrzeugs, bei dem die Geschwindigkeit des Kraftfahrzeugs derart eingestellt wird, dass ein Abstand zwischen dem Kraftfahrzeug und einem in Fahrtrichtung des Kraftfahrzeugs vor dem Kraftfahrzeug befindlichen weiteren Fahrzeug einen vorgegebenen Abstandswert nicht unterschreitet,
**dadurch gekennzeichnet,**
**dass** anhand eines Verfahrens nach einem der Ansprüche 1 bis 35 eine Bewegungstrajektorie des Kraftfahrzeugs (101) und/oder des weiteren Fahrzeugs (104) bestimmt wird, dass in Abhängigkeit von der Bewegungstrajektorie ein Abstand zwischen dem Kraftfahrzeug (104) und dem weiteren Fahrzeug (101) prädiziert wird, und dass die Geschwindigkeit des Kraftfahrzeugs (101) in Abhängigkeit von dem prädizierten Abstand eingestellt wird.

38. Computerprogrammprodukt,
**dadurch gekennzeichnet,**

**dass** es einen Algorithmus definiert, der ein Verfahren nach einem der vorangegangenen Ansprüche umfasst.

39. Vorrichtung zum Prädizieren einer Bewegungstrajektorie eines sich im Straßenverkehr bewegenden Objekts, umfassend

- wenigstens einen Sensor (102), aus dessen Signalen eine Bewegungsgröße des Objekts (101; 104) ermittelbar ist, **gekennzeichnet durch**
- eine Fahrmanövererkennungseinrichtung (203; 704), mit der anhand einer Bewertung der Bewegungsgröße ein Fahrmanöver des Objekts (101; 104) ermittelbar ist und
- eine Prädiktionseinrichtung ($205_1$;...; $20_5$N; $706_1$;...; $706_N$) , mit der anhand eines Modells die Bewegungstrajektorie des Objekts (101; 104) berechenbar ist, wobei das Modell in Abhängigkeit von dem ermittelten Fahrmanöver aus einer Menge von Modellen auswählbar ist.

**Claims**

1. A method for predicting a movement trajectory of an object moving in road traffic, said method comprising the following steps:

- determining at least one movement quantity of the object (101; 104),
**characterized by** the further steps of
- identifying a driving maneuver carried out by the object (101; 104) based on an evaluation of the determined movement quantity,
- selecting a model of the movement of the object (101; 104) as a function of the identified driving maneuver, and
- calculating the movement trajectory of the object (101; 104) based on the selected model.

2. A method according to claim 1,
**characterized in that**
the driving maneuver of the object (101; 104) is selected from a set of predetermined driving maneuvers.

3. A method according to claim 1 or 2,
**characterized in that**
the identified driving maneuver is composed of a driving maneuver describing the longitudinal movement of the object (101; 104) and a driving maneuver describing the transverse movement of the object (101; 104).

4. A method according to any one of the preceding claims,
**characterized in that**
the driving maneuver describing the transverse movement of the object (101; 104) is selected from a set comprising at least one straight-line travel, one cornering travel, and one lane change.

5. A method according to any one of the preceding claims,
**characterized in that**
a differentiation between a cornering travel and a lane change is made based on a characteristic movement quantity, which is constituted by a first movement quantity characterizing a change in the movement direction of the object (101; 104) and at least one second movement quantity of the object (101; 104).

6. A method according to claim 5,
**characterized in that**
the second movement quantity of the object (101; 104) is a velocity of the object (101; 104).

7. A method according to claim 5,
**characterized in that**
the second movement quantity is a steering angle at steerable wheels of the object (101; 104).

8. A method according to any one of the preceding claims,
**characterized in that**
the movement trajectory is determined based on the model as a function of at least one parameter.

**9.** A method according to claim 8,
**characterized in that**
a position of the object (101; 104) predicted based on the movement trajectory is compared to a detected position of the object (101; 104) and that the parameter is adjusted as a function of the result of the comparison.

**10.** A method according to any one of the preceding claims,
**characterized in that**
the object (101; 104) is an environment object (104) present in the environment of a motor vehicle (101), wherein the movement quantity of the environment object (104) is determined by means of an environment sensor (102) of the motor vehicle (101).

**11.** A method according to any one of the preceding claims,
**characterized in that**
the driving maneuver describing the longitudinal movement of the environment object (104) is identified from a set comprising at least one uniform movement and one emergency braking as a function of a comparison of velocities of the object (104) present at the successive points in time.

**12.** A method according to any one of the preceding claims,
**characterized in that**
a movement direction of the environment object (104) is determined at successive points in time and that the driving maneuver describing the transverse movement of the environment object (104) is identified based on a comparison of course angles determined from the determined movement directions.

**13.** A method according to any one of the preceding claims,
**characterized in that**
the driving maneuver describing the transverse movement of the environment object (104) is identified based on a comparison of the quantity

$$\left(\gamma_{Obj,0}(t) - \gamma_{Obj,0}(t_0)\right) \cdot v_{Obj,0}$$

with at least one threshold value, wherein $\gamma_{Obj,0}(t)$ denotes the course angle in a stationary axis system at an observation time, $\gamma_{Obj,0}(t)$ denotes the course angle in the stationary axis system at the beginning of a change in the course angle, and $v_{Obj,0}$ denotes the velocity of the environment object (104).

**14. A method according to any one of the preceding claims,**
**characterized in that**
a lane change of the environment object (104) is identified if the course angle of the environment object (104) changes to a predetermined extent and if the quantity

$$\left(\gamma_{Obj,0}(t) - \gamma_{Obj,0}(t_0)\right) \cdot v_{Obj,0}$$

assumes values within a predetermined interval.

**15.** A method according to claim 14,
**characterized in that**
a cornering travel of the environment object (104) is identified if the course angle of the environment object (104) changes to a predetermined extent and if the quantity

$$\left(\gamma_{Obj,0}(t) - \gamma_{Obj,0}(t_0)\right) \cdot v_{Obj,0}$$

assumes values outside the predetermined interval.

**16.** A method according to any one of the preceding claims,
**characterized in that**
the movement trajectory of the environment object (104) is determined based on a predicted velocity of the environment object (104) and a predicted course angle of the environment object (104).

**17.** A method according to any one of the preceding claims,
**characterized in that**
the movement trajectory of the environment object (104) is calculated recursively, wherein a position of the environment object (104) in one prediction step is determined based on the predicted velocity and the predicted course angle from the position determined in a preceding prediction step.

**18.** A method according to any one of the preceding claims,
**characterized in that**
the predicted velocity of the environment object (104) is calculated based on the selected model describing the longitudinal movement of the environment object (104).

**19.** A method according to any one of the preceding claims,
**characterized in that**
the predicted course angle of the environment object (104) is calculated based on the selected model describing the transverse movement of the environment object (104).

**20.** A method according to any one of the preceding claims,
**characterized in that**
the predicted course angle of the environment object (104) is calculated in accordance with a sigmoid function if a lane change has been identified as the driving maneuver, wherein the shape of the sigmoid function is determined by at least one parameter, which is determined as a function of the velocity of the environment object (104).

**21.** A method according to any one of the preceding claims,
**characterized in that**
the course angle $\gamma_{Obj,0}(t+\Delta t)$ of the environment object (104) predicted for the point in time $t + \Delta t$ is calculated by

$$\gamma_{Obj,0}(t + \Delta t) = \gamma_{obj,0}(t) + p \cdot \Delta t$$

if a cornering travel has been identified as the driving maneuver, wherein the quantity $\gamma_{Obj,0}(t)$ is the course angle of the environment object (104) at an observation time $t$, $\Delta t$ is a time interval, and $p$ is a parameter.

**22.** A method according to any one of the preceding claims,
**characterized in that**
the object (101; 104) is the motor vehicle (101), wherein the movement quantity is detected by means of at least one vehicle sensor.

**23.** A method according to any one of the preceding claims,
**characterized in that**
the driving maneuver describing the transverse movement of the motor vehicle (101) is identified based on a yaw rate of the motor vehicle and/or based on a steering angle set at steerable wheels of the vehicle.

**24.** A method according to any one of the preceding claims,
**characterized in that**
a straight-line travel (GAF) of the motor vehicle (101) is identified if the magnitude of the yaw rate of the vehicle and/or the magnitude of the steering angle are smaller than a threshold value.

**25.** A method according to any one of the preceding claims,
**characterized in that**
a cornering travel (KUF) of the motor vehicle is identified if the product of the steering angle and the yaw rate is greater than a predetermined threshold value and/or the magnitude of a change in the yaw angle during the driving maneuver is greater than a predetermined threshold value.

26. A method according to any one of the preceding claims,
**characterized in that**
a lane change of the motor vehicle (101) is identified if neither a straight-line travel (GAF) nor a cornering travel (KUF) are identified.

27. A method according to any one of the preceding claims,
**characterized in that**
a lane change is divided into at least three successive phases, wherein the magnitude of the yaw rate of the motor vehicle (101) in a first phase (SW1) is greater than a threshold value, in an intermediate phase (SWZ) smaller than a threshold value, and in a second phase (SW2) greater than a threshold value, and wherein the yaw rate has a different sign in the fist phase (SW1) and in the second phase (SW2).

28. A method according to any one of the preceding claims,
**characterized in that**
for the first phase (SW1) a maximum duration is predefined and that after a preceding detection of a lane change a cornering travel of the motor vehicle (101) (KUF) is identified if the duration of the first phase exceeds the maximum duration.

29. A method according to any one of the preceding claims,
**characterized in that**
for the first phase (SW1) a minimum duration is predefined and that after a preceding detection of a lane change a straight-line travel (GAF) is identified if the duration of the first phase (SW1) remains below the minimum duration.

30. A method according to any one of the preceding claims,
**characterized in that**
for the intermediate phase (SWZ) of the lane change a maximum duration is predefined and that after a preceding detection of a lane change a straight-line travel (GAF) is identified if the duration of the intermediate phase (SWZ) exceeds the maximum duration.

31. A method according to any one of the preceding claims,
**characterized in that**
the movement trajectory of the motor vehicle (101) for the first phase of a lane change is predicted as a function of determined longitudinal and transverse velocities and/or as a function of determined longitudinal and transverse accelerations of the motor vehicle (101) based on a Euler prediction.

32. A method according to any one of the preceding claims,
**characterized in that**
the movement trajectory of the motor vehicle (101) during the first phase (SW1) of the lane change is recorded and approximated by a polynomial and that the polynomial determined in this process is used for the prediction of the movement trajectory of the motor vehicle (101) for the second phase (SW2) of the lane change.

33. A method according to any one of the preceding claims,
**characterized in that**
the predicted movement trajectory for the second phase (SW2) of the lane change corresponds to the determined polynomial, which is rotated by 180˚ around an end point of the first phase of the lane change and which is joined to the movement trajectory of the motor vehicle (101) in the intermediate phase (SWZ) of the lane change.

34. A method according to claim 32 or 33,
**characterized in that**
the polynomial is a third-degree polynomial.

35. A method according to any one of the preceding claims,
**characterized in that**
the movement trajectory of the motor vehicle (101) is determined based on a predicted length of a circular arc and a radius of the circular arc if the identified driving maneuver is a cornering travel (KUF).

36. A method for avoiding a collision between a motor vehicle and an environment object in the environment of the motor vehicle or for minimizing the consequences of a collision, in which method movement trajectories of the motor vehicle and/or the environment object are determined and a collision location is determined on the basis of an evaluation of the movement trajectories, and in which method collision-avoiding measures and/or measures for minimizing the consequences of a collision are initiated as a function of the distance from the collision location, **characterized in that**
the movement trajectory of the environment object (104) and/or the movement trajectory of the motor vehicle (101) are determined based on a method according to any one of the preceding claims.

**37.** A method for controlling the velocity of a motor vehicle, in which method the velocity of the motor vehicle is adjusted such that a distance between the motor vehicle and a further vehicle being present in front of the motor vehicle in the direction of travel of the motor vehicle does not become smaller than a predetermined distance value, **characterized in that**
based on a method according to any one of claims 1 to 35 a movement trajectory of the motor vehicle (101) and/or the further vehicle (104) is determined, that a distance between the motor vehicle (101) and the further vehicle (104) is predicted as a function of the movement trajectory, and that the velocity of the motor vehicle (101) is adjusted as a function of the predicted distance.

**38.** A computer program product,
**characterized in that**
it defines an algorithm which comprises a method according to any one of the preceding claims.

**39.** An apparatus for predicting a movement trajectory of an object moving in road traffic, comprising

- at least one sensor (102), from whose signals a movement quantity of the object (101; 104) can be determined,
**characterized by**
- a driving maneuver detection device (203; 704) by means of which a driving maneuver of the object (101; 104) can be identified based on an evaluation of the movement quantity, and
- a prediction device ($205_1$; ... ; $205_N$; $706_1$; ... ; $706_N$) by means of which the movement trajectory of the object (101; 104) can be calculated based on a model, wherein the model can be selected from a set of models as a function of the identified driving maneuver.

## Revendications

**1.** Procédé de prédiction d'une trajectoire de déplacement d'un objet se déplaçant dans la circulation routière, avec les étapes suivantes :

- détermination d'au moins une grandeur de déplacement de l'objet (101 ; 104), **caractérisé par** les étapes supplémentaires
- détermination d'une manoeuvre de conduite qui est exécutée par l'objet (101 ; 104), à l'aide d'une évaluation de la grandeur de déplacement déterminée,
- sélection d'un modèle du déplacement de l'objet (101 ; 104) en fonction de la manoeuvre de conduite déterminée et
- calcul de la trajectoire de déplacement de l'objet (101 ; 104) à l'aide du modèle sélectionné.

**2.** Procédé selon la revendication 1,
**caractérisé en ce que**
la manoeuvre de conduite de l'objet (101 ; 104) est sélectionnée parmi un ensemble de manoeuvres de conduite paramétrées.

**3.** Procédé selon la revendication 1 ou la revendication 2,
**caractérisé en ce que**
la manoeuvre de conduite déterminée se compose d'une manoeuvre de conduite décrivant le déplacement longitudinal de l'objet (101 ; 104) et d'une manoeuvre de conduite décrivant le déplacement transversal de l'objet (101 ; 104).

**4.** Procédé selon une des revendications précédentes,
**caractérisé en ce que**
la manoeuvre de conduite décrivant le déplacement transversal de l'objet (101 ; 104) est sélectionnée parmi un ensemble qui comprend au moins une marche en ligne droite, une marche en virage et un changement de voie.

5. Procédé selon une des revendications précédentes,
   **caractérisé en ce**
   **qu'**une distinction est effectuée entre une marche en virage et un changement de voie à l'aide d'une grandeur de déplacement caractéristique qui est formée à partir d'une première grandeur de déplacement qui caractérise une variation de la direction de déplacement de l'objet (101 ; 104) et d'au moins une deuxième grandeur de déplacement de l'objet (101 ; 104).

6. Procédé selon la revendication 5,
   **caractérisé en ce que**,
   pour la deuxième grandeur de déplacement de l'objet (101 ; 104), il s'agit d'une vitesse de l'objet (101 ; 104).

7. Procédé selon la revendication 5,
   **caractérisé en ce que**,
   pour la deuxième grandeur de déplacement, il s'agit d'un angle de braquage sur des roues directrices de l'objet (101 ; 104).

8. Procédé selon une des revendications précédentes,
   **caractérisé en ce que**
   la trajectoire de déplacement est définie à l'aide d'un modèle en fonction d'au moins un paramètre.

9. Procédé selon la revendication 8,
   **caractérisé en ce**
   **qu'**une position de l'objet (101 ; 104) prédite à l'aide de la trajectoire de déplacement est comparée à une position détectée de l'objet (101 ; 104), et en ce que le paramètre est adapté en fonction du résultat de la comparaison.

10. Procédé selon une des revendications précédentes,
    **caractérisé en ce que**,
    pour l'objet (101 ; 104), il s'agit d'un objet périphérique (104) situé dans la périphérie d'un véhicule automobile (101), la grandeur de déplacement de l'objet périphérique (104) étant déterminée au moyen d'un capteur périphérique (102) du véhicule automobile (101).

11. Procédé selon une des revendications précédentes,
    **caractérisé en ce que**
    la manoeuvre de conduite décrivant le déplacement longitudinal de l'objet périphérique (104) est déterminée en fonction d'une comparaison de vitesses de l'objet (104) présentes aux instants successifs à partir d'un ensemble qui comprend au moins un déplacement uniforme et un freinage d'urgence.

12. Procédé selon une des revendications précédentes,
    **caractérisé en ce**
    **qu'**une direction de déplacement de l'objet périphérique (104) est déterminée à des instants successifs, et en ce que la manoeuvre de conduite décrivant le déplacement transversal de l'objet périphérique (104) est définie à l'aide d'une comparaison d'angles de cap déterminés à partir des directions de déplacement déterminées.

13. Procédé selon une des revendications précédentes,
    **caractérisé en ce que**
    la manoeuvre de conduite décrivant le déplacement transversal de l'objet périphérique (104) est déterminée à l'aide d'une comparaison de la grandeur

$$\left(\gamma_{Obj.0}(t) - \gamma_{Obj.0}(t_0)\right) \cdot v_{Obj.0}$$

avec au moins une valeur de seuil, $\gamma_{Obj,0}(t)$ désignant l'angle de cap dans un système d'axes fixe à un instant d'observation, $\gamma_{Obj,0}(t_0)$ l'angle de cap dans le système d'axes fixe au début d'une variation de l'angle de cap et $v_{Obj.0}$ la vitesse de l'objet périphérique (104).

**14.** Procédé selon une des revendications précédentes,
**caractérisé en ce**
**qu'**un changement de voie de l'objet périphérique (104) est déterminé si l'angle de cap de l'objet périphérique (104) varie dans une mesure paramétrée et si la grandeur

$$\left(\gamma_{Obj.0}(t) - \gamma_{Obj.0}(t_0)\right) \cdot v_{Obj.0}$$

adopte des valeurs à l'intérieur de l'intervalle paramétré.

**15.** Procédé selon la revendication 14,
**caractérisé en ce**
**qu'**une marche en virage de l'objet périphérique (104) est déterminée si l'angle de cap de l'objet périphérique (104) varie dans une mesure paramétrée et si la grandeur

$$\left(\gamma_{Obj.0}(t) - \gamma_{Obj.0}(t_0)\right) \cdot v_{Obj.0}$$

adopte des valeurs en dehors de l'intervalle paramétré.

**16.** Procédé selon une des revendications précédentes,
**caractérisé en ce que**
la trajectoire de déplacement de l'objet périphérique (104) est déterminée à l'aide d'une vitesse prédite de l'objet périphérique (104) et d'un angle de cap prédit de l'objet périphérique (104).

**17.** Procédé selon une des revendications précédentes,
**caractérisé en ce que**
la trajectoire de déplacement de l'objet périphérique (104) est calculée de façon récursive, une position de l'objet périphérique (104) étant définie dans une étape prédictive à l'aide de la vitesse prédite et de l'angle de cap prédit à partir de la position déterminée dans une étape prédictive préalable.

**18.** Procédé selon une des revendications précédentes,
**caractérisé en ce que**
la vitesse prédite de l'objet périphérique (104) est calculée à l'aide du modèle sélectionné décrivant le déplacement longitudinal de l'objet périphérique (104).

**19.** Procédé selon une des revendications précédentes,
**caractérisé en ce que**
l'angle de cap prédit de l'objet périphérique (104) est calculé à l'aide du modèle sélectionné décrivant le déplacement transversal de l'objet périphérique (104).

**20.** Procédé selon une des revendications précédentes,
**caractérisé en ce que**
l'angle de cap prédit de l'objet périphérique (104) est calculé conformément à une fonction sigmoïde si, en tant que manoeuvre de conduite, il est constaté un changement de voie, la forme de la fonction sigmoïde étant définie par au moins un paramètre qui est déterminé en fonction de la vitesse de l'objet périphérique (104).

**21.** Procédé selon une des revendications précédentes,
**caractérisé en ce que**
l'angle de caps $\gamma_{Obj.}(t+\Delta t)$ de l'objet périphérique (104) prédit pour l'instant $t + \Delta t$ est calculé par

$$\gamma_{Obj.0}(t + \Delta t) = \gamma_{obj.0}(t) + p \cdot \Delta t$$

si, en tant que manoeuvre de conduite, il est constaté une marche en virage, s'agissant, pour la grandeur $\gamma_{Obj.0}(t)$,

de l'angle de cap de l'objet périphérique (104) à un instant d'observation t, $\Delta t$ étant un intervalle de temps et p un paramètre.

**22.** Procédé selon une des revendications précédentes,
**caractérisé en ce que**,
pour l'objet (101 ; 104), il s'agit du véhicule automobile (101), la grandeur de déplacement étant détectée au moyen d'au moins un capteur de véhicule.

**23.** Procédé selon une des revendications précédentes,
**caractérisé en ce que**
la manoeuvre de conduite décrivant le déplacement transversal du véhicule automobile (101) est déterminée à l'aide d'un taux d'embardée du véhicule automobile et/ou à l'aide d'un angle de braquage réglé sur des roues directrices du véhicule.

**24.** Procédé selon une des revendications précédentes,
**caractérisé en ce**
**qu'**une marche en ligne droite (GAF) du véhicule automobile (101) est déterminée si le taux d'embardée du véhicule et/ou l'angle de braquage est quantitativement inférieur à une valeur de seuil.

**25.** Procédé selon une des revendications précédentes,
**caractérisé en ce**
**qu'**une marche en virage (KUF) du véhicule automobile est déterminée si le produit de l'angle de braquage et du taux d'embardée est supérieur à une valeur de seuil paramétrée et/ou si une variation de l'angle de l'embardée pendant la manoeuvre de conduite est quantitativement supérieure à une valeur de seuil paramétrée.

**26.** Procédé selon une des revendications précédentes,
**caractérisé en ce**
**qu'**un changement de voie du véhicule automobile (101) est déterminé si aucune marche en ligne droite (GAF) et aucune marche en virage (KUF) ne sont constatées.

**27.** Procédé selon une des revendications précédentes,
**caractérisé en ce**
**qu'**un changement de voie est divisé en au moins trois phases successives, le taux d'embardée du véhicule automobile (101) étant, dans une première phase (SW1), quantitativement supérieur à une valeur de seuil, et étant, dans une phase intermédiaire (SWZ), quantitativement inférieur à une valeur de seuil et étant, dans une deuxième phase (SW2), quantitativement supérieur à une valeur de seuil, et le taux d'embardée dans la première phase (SW1) et dans la deuxième phase (SW2) présentant un signe différent.

**28.** Procédé selon une des revendications précédentes,
**caractérisé en ce que**,
pour la première phase (SW1), une durée maximale est paramétrée, et **en ce que**, après une détection préalable d'un changement de voie, une marche en virage (KUF) du véhicule automobile (101) est déterminée si la durée de la première phase dépasse la durée maximale.

**29.** Procédé selon une des revendications précédentes,
**caractérisé en ce que**,
pour la première phase (SW1), une durée minimale est paramétrée, et **en ce que**, après une détection préalable d'un changement de voie, une marche en ligne droite (GAF) est déterminée si la durée de la première phase (SW1) passe au-dessous de la durée minimale.

**30.** Procédé selon une des revendications précédentes,
**caractérisé en ce que**,
pour la phase intermédiaire (SWZ) du changement de voie, une durée maximale est paramétrée, et **en ce que**, après une détection préalable d'un changement de voie, une marche en ligne droite (GAF) est déterminée si la durée de la phase intermédiaire (SWZ) dépasse la durée maximale.

**31.** Procédé selon une des revendications précédentes,
**caractérisé en ce que**

la trajectoire de déplacement du véhicule automobile (101) est prédite à l'aide d'une prédiction d'Euler pour la première phase d'un changement de voie en fonction de vitesses longitudinales et transversales déterminées et/ou en fonction d'accélérations longitudinales et transversales déterminées du véhicule automobile (101).

**32.** Procédé selon une des revendications précédentes,
**caractérisé en ce que**
la trajectoire de déplacement du véhicule automobile (101) pendant la première phase (SW1) du changement de voie est enregistrée et est approchée par un polynôme, et **en ce que** le polynôme déterminé à cette occasion est utilisé pour la prédiction de la trajectoire de déplacement du véhicule automobile (101) pour la deuxième phase (SW2) du changement de voie.

**33.** Procédé selon la revendication 32,
**caractérisé en ce que**
la trajectoire de déplacement prévue pour la deuxième phase (SW2) du changement de voie correspond au polynôme déterminé qui est tourné de 180˚ autour d'un point extrême de la première phase du changement de voie et qui est appliqué à la trajectoire de déplacement du véhicule automobile (101) dans la phase intermédiaire (SWZ) du changement de voie.

**34.** Procédé selon la revendication 32 ou la revendication 33,
**caractérisé en ce que**
pour le polynôme, il s'agit d'un polynôme du troisième degré.

**35.** Procédé selon une des revendications précédentes,
**caractérisé en ce que**
la trajectoire de déplacement du véhicule automobile (101) est déterminée à l'aide d'une longueur prédite d'un arc de cercle et d'un rayon de l'arc de cercle si, pour la manoeuvre de conduite déterminée, il s'agit d'une marche en virage (KUF).

**36.** Procédé pour empêcher une collision entre un véhicule automobile et un objet périphérique dans la périphérie du véhicule automobile ou pour réduire des conséquences d'une collision, dans lequel des trajectoires de déplacement du véhicule automobile et/ou de l'objet périphérique sont déterminées et un lieu de collision est défini sur la base d'une évaluation des trajectoires de déplacement, et dans lequel, en fonction de la distance au lieu de collision, des dispositions empêchant la collision et/ou réduisant les conséquences de la collision sont introduites,
**caractérisé en ce que**
la trajectoire de déplacement de l'objet périphérique (104) et/ou la trajectoire de déplacement du véhicule automobile (101) sont déterminées à l'aide d'un procédé selon une des revendications précédentes.

**37.** Procédé pour réguler la vitesse d'un véhicule automobile, dans lequel la vitesse du véhicule automobile est réglée de sorte qu'un intervalle entre le véhicule automobile et un autre véhicule se trouvant, dans la direction de marche du véhicule automobile, devant le véhicule automobile ne passe pas au-dessous d'une valeur d'intervalle paramétrée,
**caractérisé en ce que**,
à l'aide d'un procédé selon une des revendications 1 à 35, une trajectoire de déplacement du véhicule automobile (101) et/ou de l'autre véhicule (104) est déterminée, **en ce que**, en fonction de la trajectoire de déplacement, un intervalle entre le véhicule automobile (101) et l'autre véhicule (104) est prédit, et **en ce que** la vitesse du véhicule automobile (101) est réglée en fonction de l'intervalle prédit.

**38.** Produit-programme d'ordinateur,
**caractérisé en ce**
**qu'**il définit un algorithme qui comprend un procédé selon une des revendications précédentes.

**39.** Dispositif pour la prédiction d'une trajectoire de déplacement d'un objet se déplaçant dans la circulation routière, comprenant

- au moins un capteur (102) à partir des signaux duquel une grandeur de déplacement de l'objet (101 ; 104) peut être déterminée,
**caractérisé par**
- un équipement de détection de manoeuvre de conduite (203 ; 704) avec lequel, à l'aide d'une évaluation de la grandeur de déplacement, une manoeuvre de conduite de l'objet (101 ; 104) peut être déterminée et
- un équipement de prédiction ($205_1$ ; ... ; $205_N$ ; $706_1$ ; ... ; $706_N$) avec lequel, à l'aide d'un modèle, la trajectoire de déplacement de l'objet (101 ; 104) peut être calculée, le modèle pouvant être sélectionné parmi un ensemble de modèles en fonction de la manoeuvre de conduite déterminée.

Fig. 1

Fig. 2

EP 1 926 647 B1

Fig. 3

EP 1 926 647 B1

Fig. 4

Fig. 5

Fig. 6

EP 1 926 647 B1

Fig. 7

EP 1 926 647 B1

Fig. 8

Fig. 9

Fig. 10

Fig. 11

Fig. 12a

Fig. 12b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040030499 A1